# EUROPEAN PATENT SPECIFICATION

(11) **EP 2 355 209 B1**
(45) Date of publication and mention of the grant of the patent: **03.06.2015**
(21) Application number: 10002452.0
(22) Date of filing: 09.03.2010
(51) Int. Cl.: H01M 2/30, H01M 10/42, H01H 85/20

(54) **Battery system with service plug connection**
Batteriesystem mit Servicesteckeranschluss
Système de batterie avec connexion de fiche de test

(30) Priority: 27.01.2010 JP 2010015522
(43) Date of publication of application: 10.08.2011
(73) Proprietor: SANYO Electric Co., Ltd., Moriguchi City Osaka 570-8677 (JP); Yamaha Hatsudoki Kabushiki Kaisha, Shizuoka-ken Shizuoka 438-8501 (JP)
(72) Inventor: Yoneda Haruhiko, Moriguchi City, Osaka 570-8677 (JP); Fukukawa Kouichi, Moriguchi City, Osaka 570-8677 (JP); Yoneyama Shingo, Moriguchi City, Osaka 570-8677 (JP); Terada Junji, Iwata-shi, Shizuoka-ken (JP); Naito Shinya, Iwata-shi, Shizuoka-ken 438-8501 (JP); Itagaki Takahiro, Iwata-shi, Shizuoka-ken 438-8501 (JP)
(74) Representative: Beier, Ralph

(56) References cited:
- FR-A- 1 013 631
- JP-A- 2006 327 251
- US-A- 5 859 580

## Description

### BACKGROUND OF THE INVENTION

### 1. Field of the Invention

The present invention relates to a battery system having a service plug connected in a detachable manner in series with a plurality of series-connected batteries, and in particular to a battery system most suitable for use in an electric powered vehicle such as an electric powered scooter or motorcycle (electric motor-bike).

### 2. Description of the Related Art

A battery system used in an electric vehicle such as an electric motor-bike has many batteries connected in series to increase output voltage. This is because high output is required to drive an electric vehicle. This type of battery system has the drawback that if high voltage parts such as the output terminals are exposed when the system is not installed in a vehicle or when maintenance is performed, it cannot be handled safely. To resolve this drawback, a battery system with a service plug connected in series with the batteries has been developed. In this battery system, output power is cut-off by removing the service plug. Since the service plug is removed from this battery system to cut-off output power during operations such as maintenance work, those operations can be conducted safely.

In addition, a fuse can be installed in the service plug of this battery system for added convenience of use. This is because a blown fuse can be replaced by exchanging the service plug for one having a new fuse. A battery system that implements this has been developed.

Refer to Japanese Laid-Open Patent Publication No. 2008-243710.

The battery system disclosed in JP 2008-243710 A houses a fuse in the service plug, and is configured to allow the fuse to be exchanged with the service plug. Incidentally, the reliability of a battery system installed in an electric vehicle can be improved with a water-tight configuration that can prevent water ingress. A water-tight configuration can be implemented with a gasket that intervenes between the service plug and the external case. However, a water-tight battery system with a gasket between the service plug and the external case requires connection of the service plug in an accurate position in the external case. This is because if the connection is misaligned, the gasket becomes improperly sandwiched between the service plug and the external case, and the ability to prevent water ingress degrades. A configuration, which connects the service plug in proper alignment with the external case with an intervening gasket, has the drawback that contact resistance can easily result from connection of the service plug connecting terminals the with the external case receptacles. This is because when the service plug and external case are connected in specific positions, the position of the connecting terminals attached to the service plug can easily become shifted relative to the receptacles mounted on the external case. With a configuration that connects the service plug to the external case by inserting terminals attached to the service plug in receptacles mounted on the external case, the terminals can be connected in accurate positions in the receptacles. However, a configuration, which restricts the service plug to a specific position in the external case, makes connection irrespective of the position of the connecting terminals relative to the receptacles. Here, there is position error in attachment of the connecting terminals to the service plug and in attachment of the receptacles to the external case. This situation can result in the detrimental effect that the position of the connecting terminals can be offset relative to the receptacles, and electrical connection cannot be made reliably. Further, an electric vehicle battery system is discharged and charged with high currents to accelerate the vehicle with the motor and decelerate the vehicle by regenerative braking. Therefore, it is important to reduce contact resistance between the connecting terminals and the receptacles. To achieve this, thick, low electrical resistance metal-plate is used in a configuration that inserts the connecting terminals in the receptacles. In this configuration, if the position of the connecting terminals is shifted relative to the receptacles, the connecting terminals cannot be inserted in proper position and the quality of connection degrades. This increases the contact resistance and does not allow efficient transmission of battery system power to the vehicle-side.

Further plug devices for circuit breakers are described in US 5 859 580 A, FR 1 013 631 A and JP 2006 327251 A.

### SUMMARY OF THE INVENTION

The present invention was developed with the object of further resolving the drawbacks described above. Thus, it is a primary object of the present invention to provide a battery system that can electrically connect service plug connecting terminals and external case receptacles in an ideal manner while connecting the service plug and external case in a water-tight configuration.

The battery system of the present invention is provided with an external case 2 that houses a plurality of batteries 1, and a service plug 4 that connects to the external case 2 in a detachable manner. The service plug 4 is provided with a plug case 40 that connects to the external case 2 in a detachable manner, a fuse 5 housed inside the plug case 40, and a pair of connecting terminals 51 connected to the ends of the fuse 5. The external case 2 is provided with output terminals 7 connected to the batteries 1, a plug connecting section 25 for connection with the plug case 40, and receptacles 31 to insert and connect the service plug 4 connecting terminals 51 when the plug case 40 is connected with the plug connecting section 25. With the plug case 40 of the service plug 4 connected to the plug connecting section 25, the connecting terminals 51 are connected to the receptacles 31. This connects the fuse 5 to the batteries 1 through the connecting terminals 51 and receptacles 31, and in this state, the battery system outputs voltage to the output terminals 7. In addition, a gasket 49 is provided between the plug case 40 and the plug connecting section 25, and the service plug 4 connects to the external case 2 via the gasket 49 in a water-tight manner. Further, in this battery system, the connecting terminals 51 are held in the plug case 40 in a floating configuration that allows movement in a direction perpendicular to the direction of insertion. Furthermore, according to the invention, the inside of the cover casing (41) cylindrical region (41A) has connecting bosses (41 D) to connect the inner casing (42); the inner casing (42) is provided with connecting holes (42D) to insert the connecting bosses (41 D); the inner casing (42) connects to the cover casing (41) in a configuration that inserts the connecting bosses (41 D) through the connecting holes (42D); the inside shape of the connecting holes (42D) is made larger than the outside of the connecting bosses (41 D); and the inner casing (42) is connected to the cover casing (41) in a mechanically floating configuration, and the pair of connecting terminals (51) is a pair of plug blades (51A) that is two metal plates disposed in a common plane; and the connecting holes (42D) are elongated holes that allow the connecting terminals (51) to move in the direction of the thickness of the plug blades (51A).

The battery system described above has the characteristic that the service plug connecting terminals and external case receptacles can be electrically connected in an ideal manner while connecting the service plug with the external case in a water-tight configuration. This is because the battery system described above is provided with a gasket between the plug case and the plug connecting section, and the gasket is sandwiched between the plug case and the plug connecting section for a water-tight connection. In addition, the service plug connecting terminals are held in the plug case in a floating configuration that allows movement of the connecting terminals in a direction perpendicular to the insertion direction. Specifically, since the connecting terminals are held in a manner that allows movement relative to the plug case, even though the plug case connects in a specific location with the external case plug connecting section, the connecting terminals move to a position that connects the connecting terminals to the receptacles in a favorable connection. Consequently, even with relative position shift between the connecting terminals and the plug case, and between the receptacles and the external case, connecting terminals can be inserted in ideal positions in the receptacles, and the battery system has the characteristic that electrical connection between the connecting terminals and receptacles is made in an ideal manner.

In the battery system of the present invention, a pair of connecting terminals 51 can be two metal plates disposed in a common plane to form plug blades 51A. Further, the connecting terminals 51 can be held in the plug case 40 in a floating configuration that allows the plug blades 51A to move in the direction of the blade thickness.

In the battery system of the present invention, the external case 2 plug connecting section 25 has a projecting region 25X that extends out from the surface of the external case 2, and a gasket 49 can be disposed around the entire perimeter of the projecting region 25X. The plug case 40 has a cylindrical region 41A for insertion of the projecting region 25X of the plug connecting section 25, and the gasket 49 is sandwiched between the inside surface of the cylindrical region 41A and the outside surface of the projecting region 25X to allow connection of the service plug 4 to the external case 2 in a water-tight manner. In this battery system, insertion of the external case plug connecting section in the plug case cylindrical region allows the plug case and external case to be connected in a simple, easily connected configuration for an ideal water-tight connection. In particular, a structure, which inserts the projecting region of the plug connecting section in the cylindrical region to sandwich the gasket between the outside of the projecting region and the inside of the cylindrical region, has the characteristic that the service plug can be smoothly attached and detached while the gasket intervenes between the projecting region and the cylindrical region for an ideal water-tight connection. This is because gasket compression prevents distortion of the cylindrical region. Although gasket pressure applies stress to widen the cylindrical region opening, the cylindrical region has sufficient strength to resist the widening stress and the cylindrical region does not stretch or deform.

The battery system of the present invention is provided with a gasket groove 25C to dispose the gasket 49 around the perimeter of the projecting region 25X, which is the plug connecting section 25, and an O-ring 49A gasket 49 can be disposed in that gasket groove 25C. In this battery system, the position of the gasket does not shift even when the service plug is attached or detached from the external case. This allows connection of the service plug to the external case plug connecting section in a water-tight configuration while holding the gasket in a fixed position.

In the battery system of the present invention, the plug case 40 is provided with a cover casing 41 that includes the cylindrical region 41A, and an inner casing 42 attached to the inside of the cover casing 41 to hold the fuse 5. The cover casing 41 includes the cylindrical region 41A for inserting the plug connecting section 25 projecting region 25X, and the external case 2 plug connecting section 25 has a plug recess 25B for inserting the inner casing 42. The service plug 4 can be connected to the external case 2 by inserting the inner casing 42 in the plug recess 25B and inserting the plug connecting section 25 projecting region 25X in the cylindrical region 41A. This battery system has the characteristic that the service plug can be attached to an accurate position on the external case while keeping the service plug assembly simple.

In the battery system of the present invention, the fuse 5 is provided with a fuse element 50 connected at both ends with the connecting terminals 51, and a fuse holder 52 to retain the fuse element 50. The fuse holder 52 can be held in the inner casing 42 in a floating configuration. In this battery system, the fuse can be housed in the service plug in a floating configuration that has a simple structure.

In the battery system of the present invention, the plug case 40 is provided with a cover casing 41 that has a cylindrical region 41A, and an inner casing 42 connected to the inside of the cover casing 41 to hold the fuse 5. The cover casing 41 has connecting bosses 41D to connect the inner casing 42 to the inside of the cylindrical region 41A, and the inner casing 42 has connecting holes 42D to accept connecting boss 41D insertion. The inner casing 42 can be connected to the cover casing 41 by inserting the connecting bosses 42D through the connecting holes 42D. Further, the insides of the connecting holes 42D can be made larger than the outsides of the connecting bosses 41D to connect the inner casing 42 to the cover casing 41 in a floating configuration. In this battery system, the inner casing can be connected to the cover casing in a floating configuration having a simple structure to hold the fuse in the service plug in a floating configuration.

In the battery system of the present invention, the pair of connecting terminals 51 can be two metal plates disposed in a common plane to form the plug blades 51A, and the connecting holes 42D can be elongated in a direction that allows the plug blades 51A to move in the direction of the blade thickness.

In the battery system of the present invention, the receptacles 31 can be provided with arcing projections 31a on the connecting terminal 51 insertion-side. Arcing can occur when connecting terminals are inserted, and that arcing can result in roughness, carbon, and dirt at the edges of the connecting terminals and receptacles. This battery system can maintain the surfaces of the connecting terminals and the receptacles in a smooth, clean condition to allow stable contact.

The battery system of the present invention can be installed on-board an electric vehicle. The above and further objects of the present invention as well as the features thereof will become more apparent from the following detailed description to be made in conjunction with the accompanying drawings.

### BRIEF DESCRIPTION OF THE DRAWINGS

Fig. 1 is an oblique view of a battery system for an embodiment of the present invention;
Fig. 2 is an exploded oblique view of the battery system shown in Fig. 1;
Fig. 3 is an oblique view from behind of the battery system shown in Fig. 2;
Fig. 4 is an oblique view of the battery assembly of the battery system shown in Fig. 2;
Fig. 5 is an oblique view from the left side of the battery assembly shown in Fig. 4;
Fig. 6 is an exploded oblique view of the battery assembly shown in Fig. 4;
Fig. 7 is an exploded oblique view of the battery assembly shown in Fig. 6;
Fig. 8 is an enlarged cross-section view through the line VIII-VIII of Fig. 1 showing an output terminal of the battery system shown in Fig. 1;
Fig. 9 is an enlarged cross-section view through the line IX-IX of Fig. 1 showing an output terminal of the battery system shown in Fig. 1;
Fig. 10 is an enlarged oblique cross-section view showing an external case through-hole;
Fig. 11 is an exploded oblique view showing the connecting structure of an output lead-plate of the battery assembly shown in Fig. 4;
Fig. 12 is an exploded oblique view showing the connecting structure of an output lead-plate of the battery assembly shown in Fig. 5;
Fig. 13 is an enlarged oblique view of the metal rod that is an output terminal;
Fig. 14 is a circuit diagram of the battery system for an embodiment of the present invention;
Fig. 15 is an exploded oblique view showing the service plug detached from the external case;
Fig. 16 is an exploded oblique view of the service plug shown in Fig. 15;
Fig. 17 is an exploded oblique view from opposite side of the service plug shown in Fig. 16;
Fig. 18 is an enlarged cross-section view showing the connecting structure of the external case and the service plug; and
Fig. 19 is an enlarged cross-section view showing the connecting structure of the cover casing and the inner casing.

### DETAILED DESCRIPTION OF THE EMBODIMENT(S)

The following describes embodiments of the present invention based on the figures.

The battery system of the present invention is primarily installed on-board an electric motor-bike, and is most suitable as a power source to supply electric power to a motor for driving an electric scooter or motorcycle. However, the battery system of the present invention is not limited to use in an electric motor-bike and can also be installed as a power source used to drive an electric vehicle such as an electric automobile or an electrically powered bicycle. Further, the battery system of the present invention is not limited to use in an electric vehicle and can also be used as a power source for various electrical equipment that require high power output.

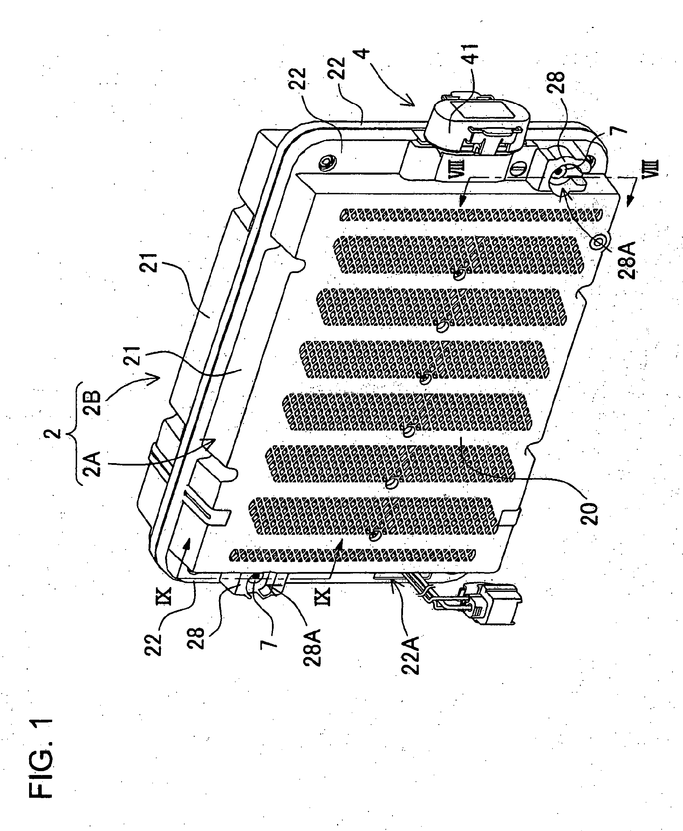

The battery system shown in Figs. 1-7 is provided with an external case 2 molded from insulating material in a water-tight construction housing a plurality of batteries 1, and a service plug 4 attached to the external case 2 in a detachable manner. In the battery system of Figs. 1-3, the external case 2 houses a battery assembly 10 made up of a plurality of batteries 1. The battery assembly 10 has a plurality of batteries 1 that can be charged connected in series and parallel by lead-plates 3.

### [external case]

The external case 2 shown in Figs. 1-3 is a box-shaped enclosure that houses the battery assembly 10 in a water-tight configuration. The external case 2 is made of molded plastic. The external case 2 of the figures has rectangular surface plates 20, and perimeter walls 21 connecting those rectangular surface plates 20. Although the external case 2 shown in the figures has a structure that is sealed in a water-tight manner, an external case with a water-tight structure is not always a requirement. For example, the external case can be configured with a water discharging hole at the bottom to discharge any water that has entered from the bottom of the case.

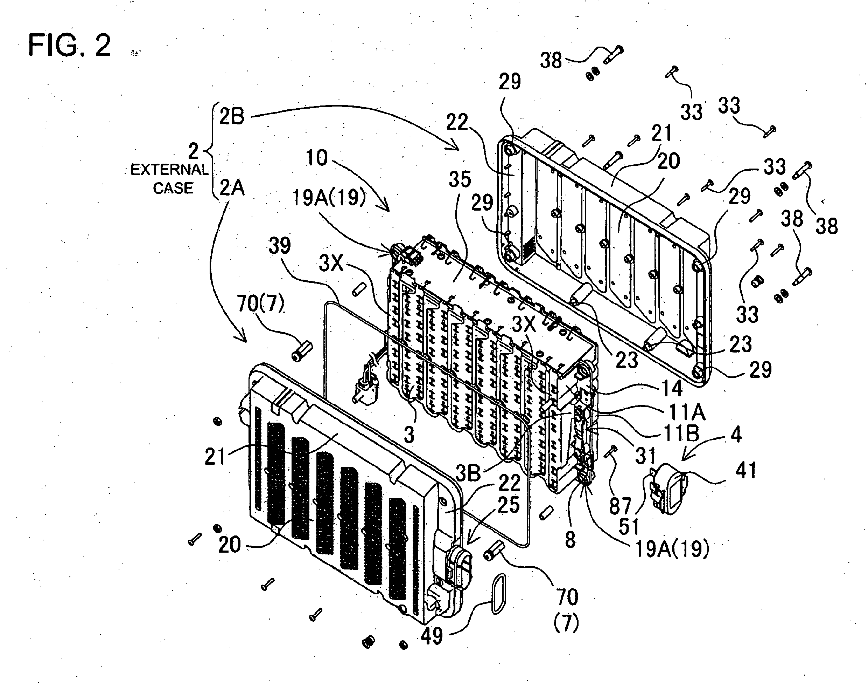

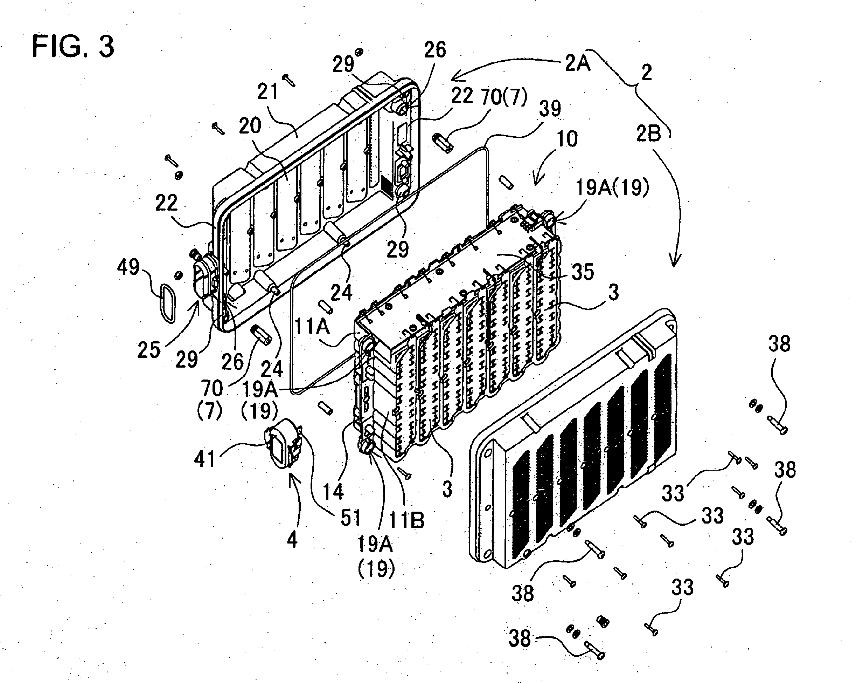

The external case 2 of Figs. 2 and 3 houses the battery assembly 10 in a manner that disposes each battery 1 perpendicular to the surface plates 20. This disposes electrodes 1A at the ends of the batteries 1 opposite the inside surfaces of the surface plates 20. A battery system that holds the battery assembly 10 in this configuration houses all the batteries 1 in parallel orientation. Since lead-plates 3 are connected to all the battery 1 electrodes 1A, the lead-plates 3 are disposed between the batteries 1 and the surface plates 20.

The external case 2 is molded from insulating plastic such as acrylonitrile-butadiene-styrene (ABS) resin, it is divided into two parts at the middle of the perimeter walls 21, and is connected together in a water-tight manner by screw-fastening. However, the two external case pieces can also be connected by techniques such as pressure fitting, thermal weld-attachment, or adhesive bonding. The external case 2 can be designed in various sizes and shapes depending on the battery system application, purpose, operating conditions, and the size, shape, and number of batteries employed.

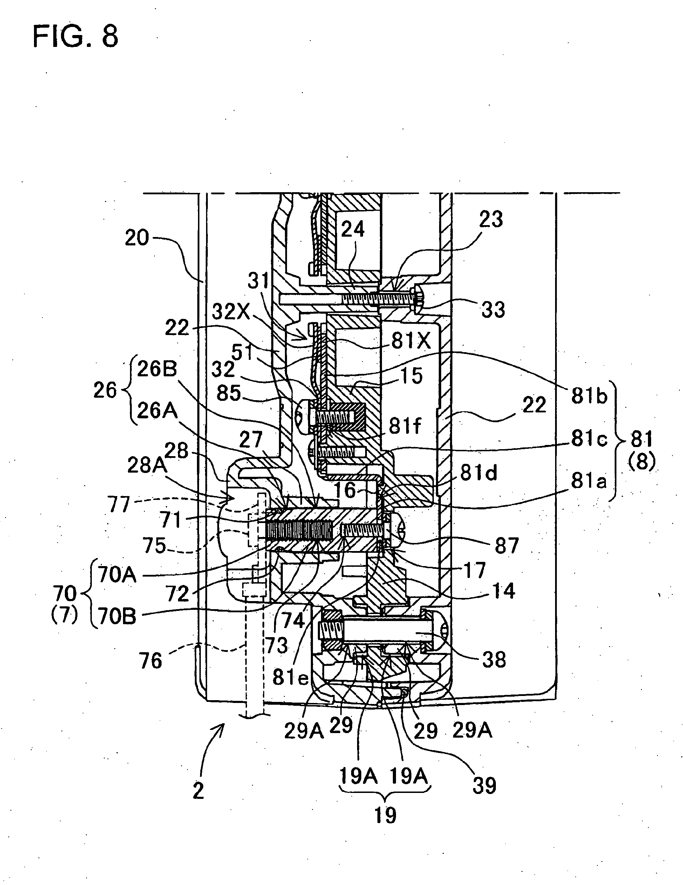

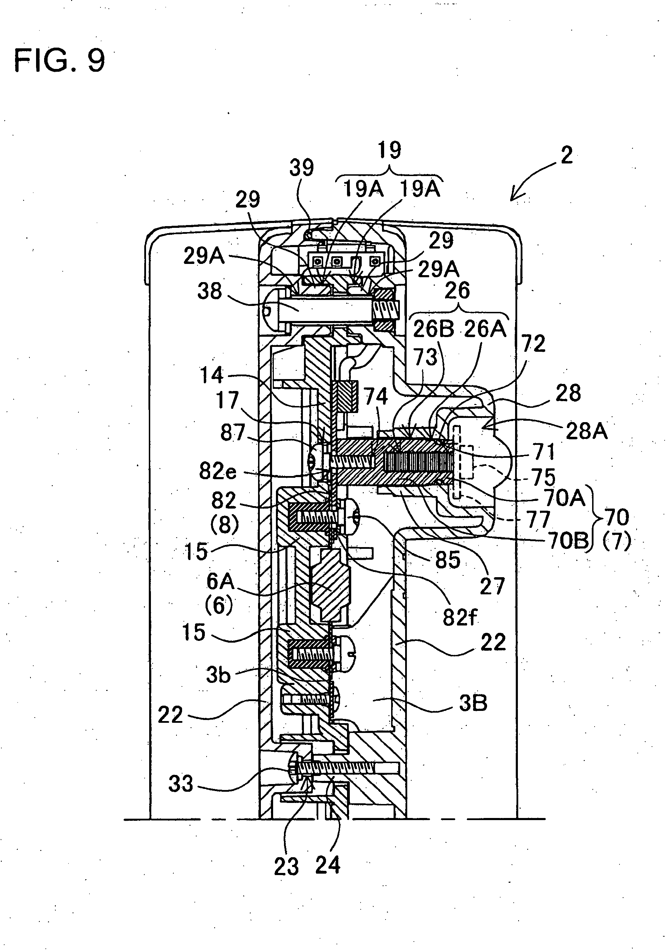

The external case 2 shown in Figs. 1-3 is divided into a first external case 2A and a second external case 2B. The first external case 2A and the second external case 2B are joined together with a gasket 39 intervening along the connecting surfaces of the perimeter walls 21 and fastened with case attachment screws 38 for a water-tight structure. Further, the external case 2 of the figures is provided with attachment extensions 22 projecting from the perimeter walls 21 at both ends to take output terminal lead-plates 8 from the battery assembly 10 to the outside. The external case 2 of Figs. 1-3 is provided with attachment extensions 22 outside the perimeter walls 21 on the short sides of the rectangular external case 2. As shown in Figs. 8 and 9, the attachment extensions 22 of the first external case 2A and the second external case 2B are provided with space to dispose the output terminal lead-plates 8. Further, the first external case 2A and the second external case 2B are molded in shapes that allow the gasket 39 to intervene between the two external case 2 pieces, which have perimeter wall 21 openings with the same shape, to allow screw-fastening and attachment in a water-tight structure. The first external case 2A and the second external case 2B are provided with screw-holes 23 to insert set screws 33 on one side, and bosses 24 to screw in the set screws 33 on the other side. These screw-holes 23 and bosses 24 are positioned at the center of the attachment extensions 22 (refer to Figs. 8 and 9), and along the long-side perimeter walls 21 that have no attachment extensions 22 on the first external case 2A and the second external case 2B (refer to Figs. 2 and 3). The screw-holes 23 for set screw 33 insertion on one side, and the bosses 24 for screw-fastening the set screws 33 on the other side are established protruding from the inside surfaces of the external case 2.

In addition, the external case 2 of Figs. 2 and 3 has case attachment screws 38 to join the first external case 2A and the second external case 2B at the four corners, which are the end regions of each attachment extension 22. The external case 2 is formed with integrated screw bosses 29 at both end regions of each attachment extension 22 to hold the battery assembly 10 in a fixed position. The external case 2 of Figs. 2 and 3 is provided with circular cylindrical screw bosses 29 that protrude from the inside surfaces of the attachment extensions 22. The circular cylindrical screw bosses 29 can be fit into attachment recesses 19A, which are attachment fittings 19 on the battery holder 11 of the battery assembly 10. The centers of the circular cylindrical screw bosses 29 have screw-holes 29A opened to accept case attachment screw 38 insertion (refer to Figs. 8 and 9).

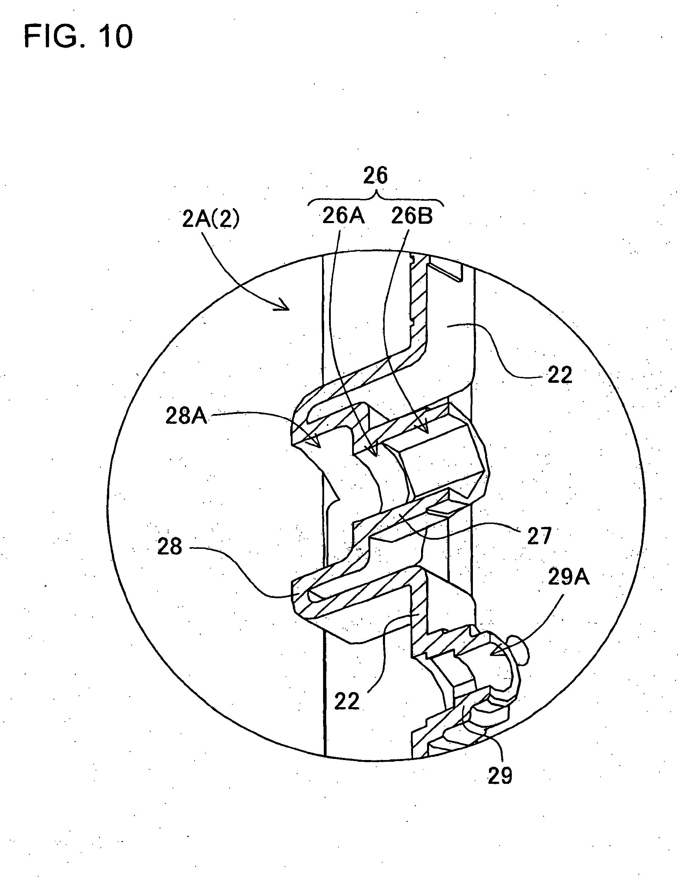

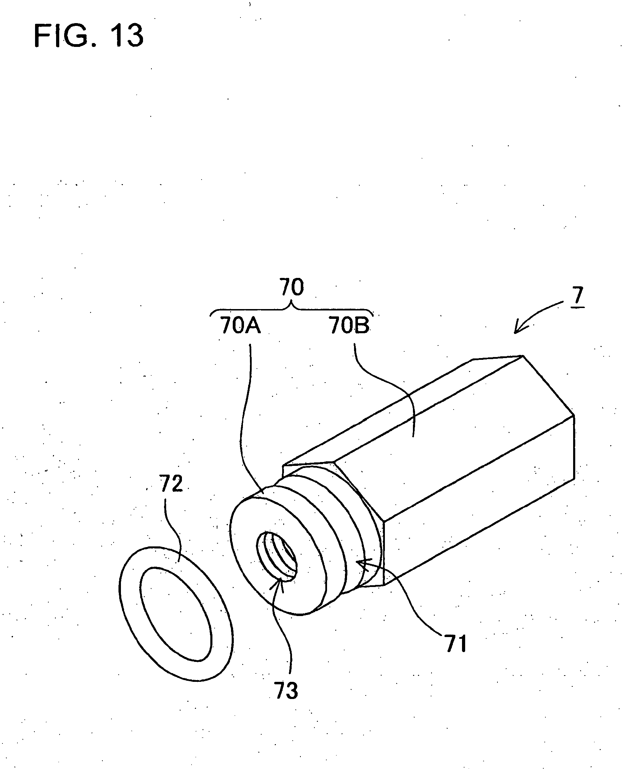

The external case 2 is also provided with through-holes 26 for insertion of the positive and negative output terminals 7. The external case 2 of Fig. 3 is provided with positive and negative output terminal 7 through-holes 26 through the attachment extensions 22 disposed at both ends. As shown in Figs. 10 and 13, metal rods 70, which are the output terminals 7, have circular cylindrical sections 70A that insert into circular cylindrical through-hole 26A sections of the through-holes 26. The through-holes 26 also have non-circular cylindrical through-hole 26B sections for insertion of non-circular cylindrical sections 70B of the metal rods 70 in a manner that prevents rotation. As shown in the external case 2 of Figs. 8-10, projecting cylinders 27 are formed in single-piece construction with the external case 2 in a manner projecting from the outside surfaces into the inside surfaces of the attachment extensions 22. The projecting cylinders 27 lengthen the through-holes 26 that have both circular cylindrical through-hole 26A sections and non-circular cylindrical through-hole 26B sections.

The external case 2 of Figs. 1, 8, and 9 is provided with connecting blocks 28 on the attachment extension 22 surfaces, which protrude from the perimeter walls 21, to establish the projecting cylinders 27. The projecting cylinders 27 are established in the connecting blocks 28, and the circular cylindrical through-holes 26A and non-circular cylindrical through-holes 26B are provided on the inside surfaces of the projecting cylinders 27. Further, the external case 2 of Figs. 1, 8, and 9 is provided with recesses 28A in the upper surfaces of the connecting blocks 28, and the through-holes 26 are opened in those recesses 28A. An external case 2 with output terminal 7 through-holes 26 opened inside recesses 28A in the connecting blocks 26 can dispose the external leads 76 for output terminal 7 electrical connection and set screws 75 screwed into the output terminals 7 at interior positions with respect to the surface plates 20. This can prevent exterior metal pieces from contacting the output terminals 7. In the external case 2 of Figs. 8 and 9, the upper surfaces of the connecting blocks 28 are disposed inward from the surface plates 20, and external lead 76 contact terminals 77 are disposed in the recesses 28A to position them at further interior positions.

### [battery assembly]

Figs. 2-7 show the battery assembly 10. The battery assembly 10 of the figures is provided with a plurality of batteries 1 that can be charged and are disposed next to each other in parallel orientation, a plastic battery holder 11 that disposes the batteries 1 in a plurality of rows and columns, and a plurality of lead-plates 3 weld-attached to electrodes 1A at the ends of each battery 1 disposed in the battery holder 11 to electrically connect adjacent batteries 1.

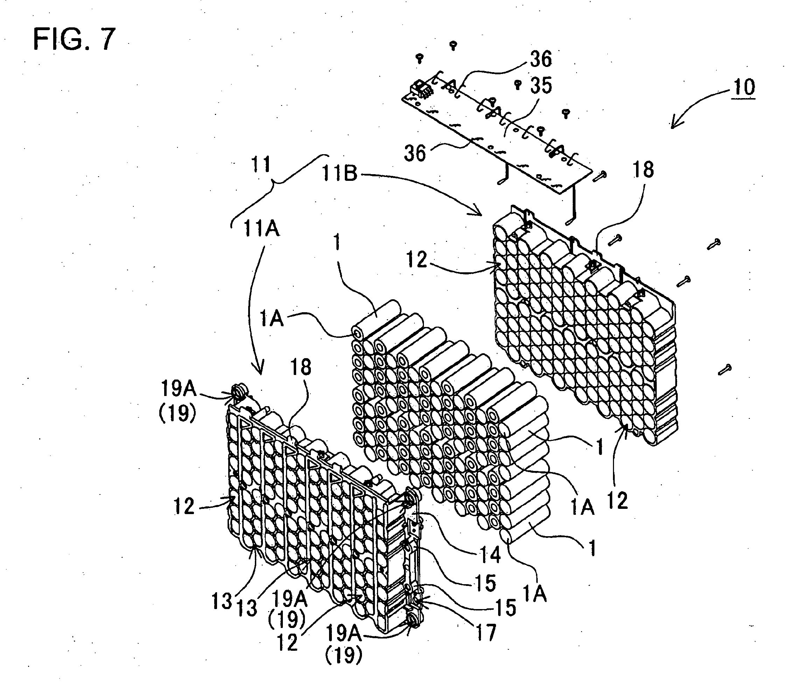

The batteries 1 of Fig. 7 are circular cylindrical batteries. A plurality of batteries 1 are arranged in multiple rows and columns with the electrodes 1A at each end of the batteries 1 positioned in common planes. The battery assembly 10 of Fig. 7 is an array of batteries 1 with eight horizontal rows and fourteen vertical columns. Specifically, one hundred and twelve batteries 1 are arranged in eight rows and fourteen columns. Batteries 1 in adjacent columns are shifted vertically to position batteries 1 in one column midway between batteries 1 in an adjacent column. This allows circular cylindrical batteries 1 to be arrayed in multiple columns in close proximity. However, the battery system of the present invention is not limited to a configuration having the number and arrangement of batteries described above. For example, batteries can also be disposed in a rectangular grid arrangement (with no column shifting).

### [batteries]

The batteries 1 are batteries that can be charged. Circular cylindrical batteries are used as the batteries 1 in the battery pack of the figures, although rectangular batteries and thin-outline batteries can also be used. In the present embodiment, circular cylindrical lithium ion batteries are used as the batteries 1. Lithium ion batteries are suitable for use in a high capacity, high output battery system. This is because lithium ion batteries can achieve high capacity-to-weight and capacity-to-volume ratios. However, the battery system of the present invention is not limited to the use of lithium ion batteries, and rechargeable batteries such as nickel-hydride batteries and nickel-cadmium batteries can also be used.

### [battery holder]

The battery assembly 10 shown in Fig. 7 has batteries 1 inserted in specified positions in battery holder 11 battery loading sections 12. As shown in Fig. 7, the battery holder 11 is formed in a shape that has circular cylindrical battery loading sections 12. The battery loading sections 12 are formed with interior shapes that can accept circular cylindrical battery insertion. The battery holder 11 of the figures is provided with one hundred and twelve battery loading sections 12 to insert batteries 1 in eight rows and fourteen columns. Both ends of the battery loading sections 12 are open.

The battery pack of Fig. 7 has a battery holder 11 that is divided into two pieces in the lengthwise direction of the cylindrical batteries 1 (left and right in the figure). The battery holder 11 is made up of a first battery holder 11A and a second battery holder 11 B. The first battery holder 11A and the second battery holder 11B are formed with both ends of the battery loading sections 12 open to accept circular cylindrical batteries 1. The battery holder 11 is molded with an insulating material such as plastic. A battery holder 11 molded from plastic in a shape establishing battery loading sections 12 can dispose the plurality of batteries 1 in an array of separate compartments that accurately align those batteries 1 in specified positions. Further, by separating the batteries 1 in independent compartments, conditions that induce battery 1 thermal runaway can be avoided. The connected battery holder 11, which is molded as two pieces, exposes the electrodes 1A at the ends of the batteries 1 to the outside from the open ends of the battery loading sections 12. The lead-plates 3 are weld-attached to the exposed electrodes 1A by a technique such as spot-welding or laser-welding. Polycarbonate can be used as the battery holder 11 plastic material. This material has high strength and is not easily dissolved by lithium ion battery electrolyte that could leak from a battery. Conversely, ABS resin is easily dissolved by lithium ion battery electrolyte and its use is undesirable.

The battery holder 11 is provided with recessed regions 13 formed to hold lead-plates 3 in fixed positions at both open ends of the battery loading sections 12. The lead-plates 3 are inserted into the recessed regions 13 and connected to the electrodes 1A at the ends of the batteries 1. Consequently, the recessed regions 13 are positioned to dispose the lead-plates 3 for connection to the battery 1 electrodes 1A.

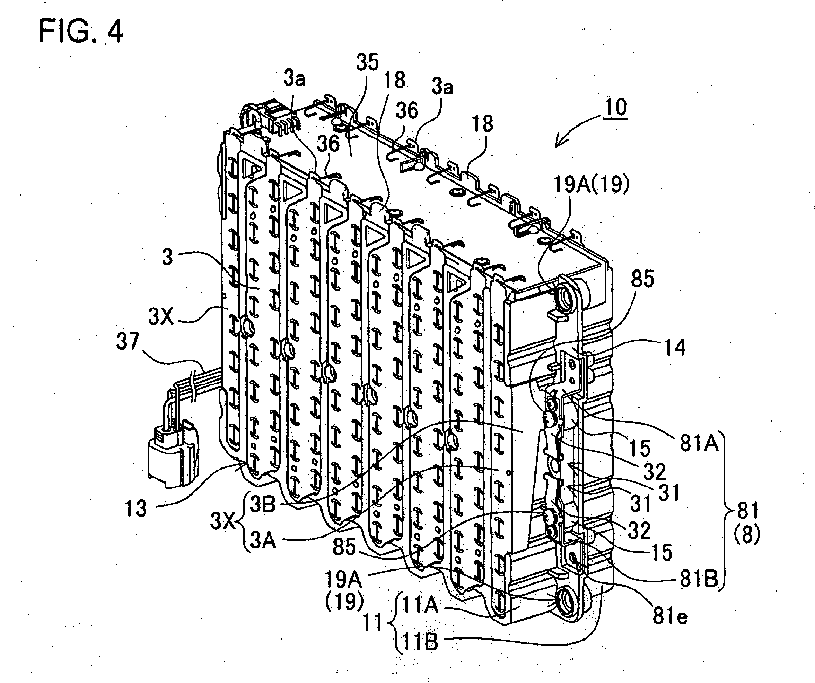

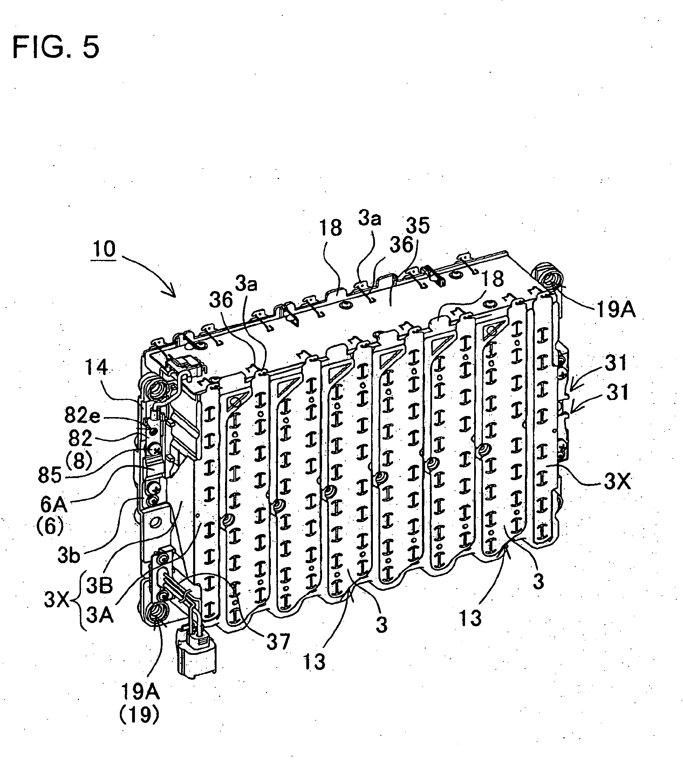

In addition, the first battery holder 11A is provided with attachment plates 14 at both ends (left and right ends of the battery holder 11 of Figs. 4 and 5) for attachment of output terminal lead-plates 8. The attachment plates 14 are disposed in planes parallel to the lead-plates 3 at the center of the narrow direction of the battery holder 11, which is the center of lengthwise direction of the circular cylindrical batteries 1. The attachment plates 14 are provided with attachment bosses 15 for attaching output terminal lead-plates 8 with set screws 85, and mounting projections 16 for attaching the output terminal lead-plates 8 in specified positions. Further, through-holes 17 are provided for connection screw 87 insertion to attach the output terminals 7 to the output terminal lead-plates 8.

As shown in Figs. 2-5, 8, and 9, both sides and both ends of the attachment plates 14 are also provided with case-mounting pieces 19 to dispose the battery holder 11 in a fixed position inside the external case 2. The case-mounting pieces 19 have case-mounting recesses 19A to mate with the screw bosses 29 of the external case 2, and the interiors are shaped to align and hold the circular cylindrical screw bosses 29 in fixed positions. The case-mounting recesses 19A, which are the case-mounting pieces 19, have through-holes established at their centers to pass the case attachment screws 38. The screw bosses 29 of the first external case 2A and the second external case 2B are inserted into the case-mounting pieces 19 provided on both sides of the battery holder 11 attachment plates 14 to connect the external case 2 in a fixed position. The first external case 2A and the second external case 2B are fastened with case attachment screws 38 to sandwich and hold the battery holder 11 in a fixed position inside the first external case 2A and the second external case 2B. The case attachment screws 38 pass through the first external case 2A, the second external case 2B, and the battery holder 11 to hold them together as a single unit.

### [lead-plates]

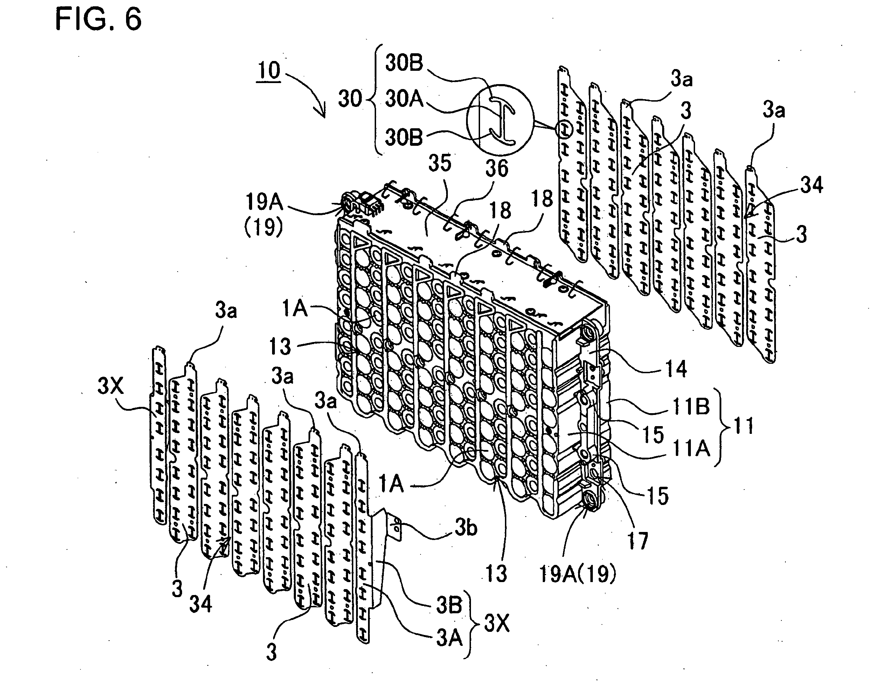

The lead-plates 3 are inserted into the battery holder 11 recessed regions 13 and spot-welded or laser-welded to the battery 1 electrodes 1A to connect adjacent batteries 1 in series and parallel. In the battery assembly 10 of Fig. 6, a plurality of lead-plates 3 is disposed in parallel orientation with an insulating gap 34 established between each lead-plate 3 and weld-attached to the battery 1 electrodes 1A.

The battery assembly 10 of Fig. 6 has seven columns of lead-plates 3 disposed at one end of the batteries 1 (upper right end in Fig. 6), and each lead-plate 3 is connected to two columns of batteries 1 with eight batteries 1 in each column. Eight columns of lead-plates 3 are disposed at the other end of the batteries 1 (lower left end in Fig. 6) with the lead-plates 3 at both sides acting as output lead-plates 3X that connect one column of eight batteries 1. The remaining six columns of lead-plates 3 connect two columns of batteries 1 with eight batteries 1 in each column. These lead-plates 3 connect the eight batteries 1 in one column in parallel, and connect batteries 1 in adjacent columns in series. Specifically, the one hundred and twelve batteries 1 are connected with eight batteries 1 in parallel and fourteen batteries 1 in series.

The battery assembly 10 of Figs. 4-6 has output lead-plates 3X connected to output terminals 7 at the positive and negative output-sides of the batteries 1. Each output lead-plate 3X is provided with an output extension 3B on a side edge to connect to an output terminal lead-plate 8. Each output lead-plate 3X has a band-shaped battery connecting section 3A that connects eight batteries 1 in parallel and a bent section on a side edge that is the output extension 3B disposed on a side of the battery holder 11 and connected to an output terminal lead-plate 8. The end of each output extension 3B is bent at a right angle and the bent end-section 3b is connected to an output terminal lead-plate 8. Since the output extension 3B of an output lead-plate 3X is formed in a wide plate-shape, the electrical resistance of the output extension 3B can be made small.

The lead-plates 3 are made from sheet-metal with low electrical resistance and superior thermal conductivity. For example, nickel, iron, steel, copper, and copper alloys in sheet-metal form can be plated with a metal such as nickel and used as the lead-plates 3. A sheet-metal thickness that is optimum for weld-attachment, for example, 0.1 mm to 0.3mm sheet-metal can be used as the lead-plates 3. If the lead-plates 3 are too thick or too thin, they cannot be spot-welded or laser-welded to the electrodes 1A at the ends of the batteries 1 with an ideal weld-attach. Since a lead-plate that is too thick requires a large amount of thermal energy for heating and fusing, detrimental effects on the batteries increase. Conversely, a lead-plate that is too thin has high electrical and thermal resistance, and does not have sufficient mechanical strength. Therefore, lead-plate thickness is set to an optimum value considering the amount of current flow and the type of application.

The lead-plates 3 of Fig. 6 are provided with slits 30 in locations that are spot-welded to the battery 1 electrodes 1A to reduce the flow of ineffective welding current. The lead-plates 3 of Fig. 6 are provided with vertical slits 30A, and horizontal slits 30B connected to the vertical slits 30A at the top and bottom the vertical slits 30A. Spot-welding electrodes are pressed onto both sides of a vertical slit 30A to weld-attach the lead-plate 3 on both sides of the vertical slit 30A to an electrode 1A at the end of a battery 1. Lead-plates 3 weld-attached to the battery 1 electrodes 1A connect the batteries 1 in a reliable manner. Further, the lead-plates 3 have extensions 3a established at their upper ends for connection to a circuit board 35. The lead-plate 3 extensions 3a are connected to the circuit board 35 via leads 36.

### [output terminal lead-plates]

The output terminal lead-plates 8 are thick sheet-metal with a lower electrical resistance than the lead-plates 3. For example, the output terminal lead-plates 8 are nickel, iron, steel, copper, or copper sheet-metal plated with a metal such as nickel. The output terminal lead-plates 8 are attached via set screws 85 to the surfaces of the attachment plates 14 provided at both ends of the first battery holder 11A

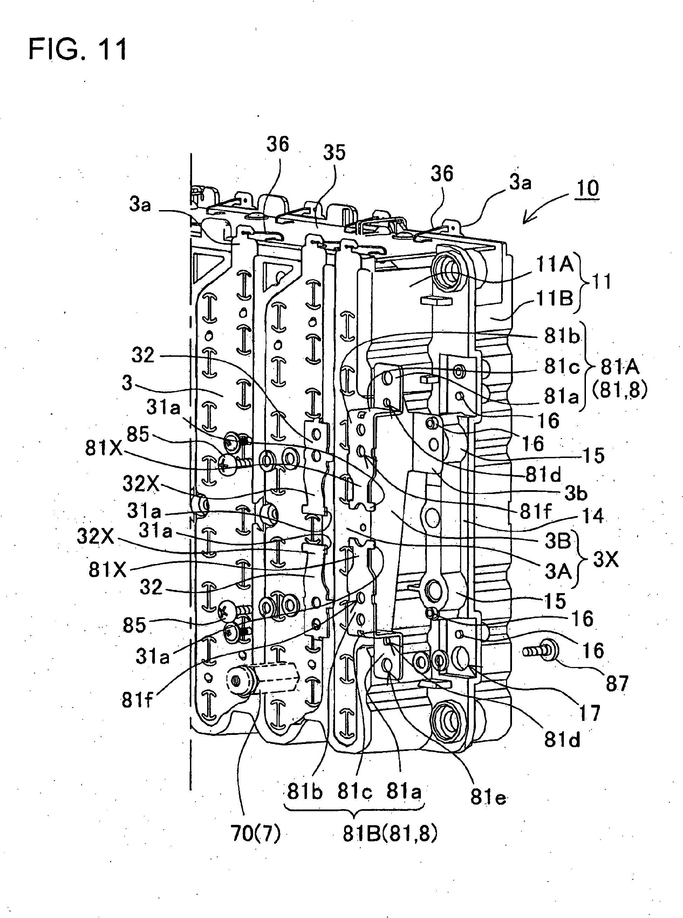

In Figs. 4 and 11, the output terminal lead-plate 8 mounted on the attachment plate 14 on the right side of the battery holder 11 is a pair of metal lead-plate pieces 81. The lead-plate pieces 81 are a first lead-plate 81A that connects to the output extension 3B of the output lead-plate 3X, and a second lead-plate 81 B that connects to the output terminal 7. The output terminal lead-plate 8 shown in Fig. 11 is the pair of lead-plate pieces 81, which are bent in Z-shapes. Each Z-shaped lead-plate piece 81 is provided with an attachment section 81a, an upright section 81c, and a connection section 81b. The attachment sections 81a are provided with mounting holes 81d that mate with the mounting projections 16 established on the surface of the attachment plate 14. The mounting projections 16 align and insert into the mounting holes 81d to dispose the attachment sections 81a in fixed positions. Further, the attachment section 81a of the second lead-plate 81 B is provided with a through-hole 81e to pass the connection screw 87 that attaches the metal rod 70, which is the output terminal 7. The connection screw 87 is passed through the through-hole 17 in the attachment plate 14, inserted through the through-hole 81e in the attachment section 81a, and screwed into the screw-hole 74 in the metal rod 70 to attach the output terminal lead-plate 8 to the metal rod 70. The connection sections 81b are provided with through-holes 81f for insertion of set screws 85 that screw into attachment bosses 15 established in the attachment plate 14. The set screws 85 are inserted through the through-holes 81f and screwed into the attachment bosses 15 to attach the output terminal lead-plates 8 to the attachment plate 14. Further, the connection sections 81b of the first lead-plate 81A and the second lead-plate 81 B are electrically connected by the service plug 4 to connect the output terminal 7 with the output lead-plate 3X.

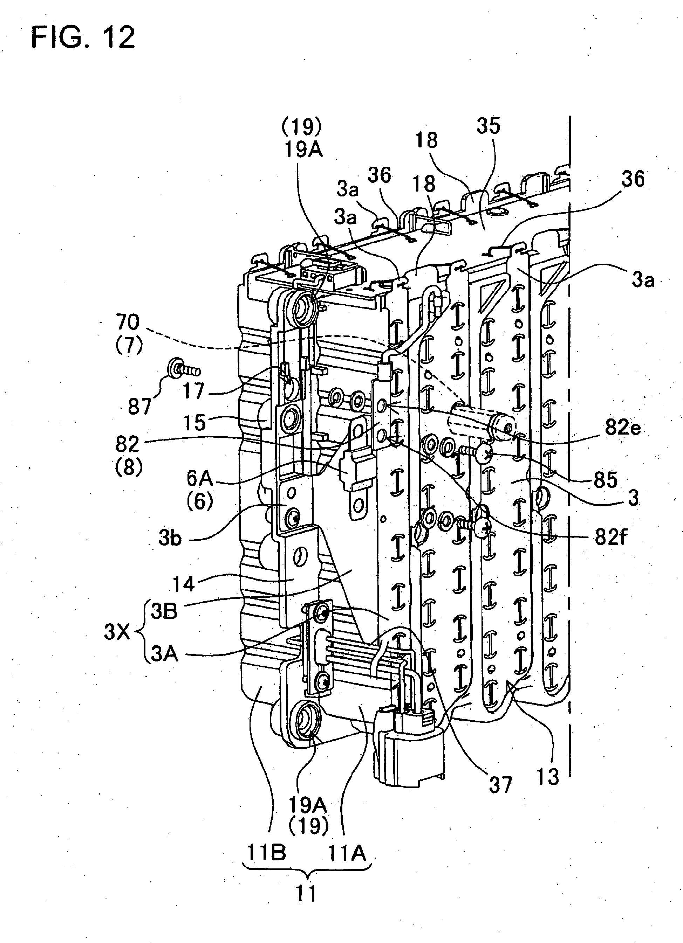

In Figs. 5 and 12, the output terminal lead-plate 8 mounted on the attachment plate 14 on the left side of the battery holder 11 is a single metal lead-plate piece 82. As shown in Figs. 9 and 12, the lead-plate piece 82 is provided with a through-hole 82e to pass the connection screw 87 that attaches the metal rod 70, which is the output terminal 7. The connection screw 87 is passed through the through-hole 17 in the attachment plate 14, inserted through the through-hole 82e in lead-plate piece 82, and screwed into the screw-hole 74 in the metal rod 70 to attach the output terminal lead-plate 8 to the metal rod 70. Further, the lead-plate piece 82 is provided with a through-hole 82f for insertion of a set screw 85 that screws into an attachment boss 15 established in the attachment plate 14. The set screw 85 is inserted through the through-hole 82f and screwed into the attachment boss 15 to attach the output terminal lead-plate 8 to the attachment plate 14. This output terminal lead-plate 8 has one end connected to the output terminal 7, and the other end connected through a protection device 6 to the output lead-plate 3X. The protection device 6 is a fuse 6A that fuses open with excessive current flow. However, the protection device 6 can also be a device that can cut-off excessive current flow such as a circuit breaker, or a positive thermal coefficient (PTC) current limiting device.

### [output terminals]

The output terminals 7 are metal rods 70 that are metals such as nickel, iron, steel, copper, or copper plated with a metal such as nickel and processed into long thin metal rod shapes. Each output terminal 7 metal rod 70 is made up of a circular cylindrical section 70A that has a circular or elliptical cylindrical shape, and a non-circular cylindrical section 70B that has a non-circular cylindrical shape. The metal rod 70 of Fig. 13 has a circular cylindrical section 70A front end with a non-circular cylindrical section 70B remaining region that has a polygonal cylindrical shape that is a hexagonal cylindrical shape. The circular cylindrical section of the metal rod does not necessarily have to be a circular cylindrical shape, and can be an elliptical cylindrical shape as well. Further, the non-circular cylindrical section does not necessarily have to be a polygonal cylindrical shape, and it can be also be a shape such as an elliptical cylindrical shape. In addition, the non-circular cylindrical section 70B of an output terminal 7 metal rod 70 has a maximum outline (equivalent outside diameter) that is larger than the maximum outline (outside diameter) of the circular cylindrical section 70A. The metal rod 70 of Fig. 13 has a circular cylindrical section 70A with a diameter that is smaller that the diameter of an inscribed circle in the polygonal cylindrical non-circular cylindrical section 70B.

Each output terminal 7 metal rod 70 is provided with a gasket groove 71, and an O-ring 72 is disposed in that gasket groove 71. As shown in Figs. 8 and 9, with the circular cylindrical section 70A of each metal rod 70 inserted in a circular cylindrical through-hole 26A, each O-ring 72 is disposed in a pressure-fit manner between the circular cylindrical section 70A and the circular cylindrical through-hole 26A. This closes the gap between each circular cylindrical section 70A and circular cylindrical through-hole 26A in a water-tight configuration. The outside diameter of each circular cylindrical section 70A is smaller than the inside diameter of each circular cylindrical through-hole 26A, and a very small gap is established between the circular cylindrical section 70A and the circular cylindrical through-hole 26A. For example, the gap between the circular cylindrical section 70A and the circular cylindrical through-hole 26A is 0.1 mm to 0.5mm, and this gap is closed-off in a water-tight configuration by the O-ring 72 gasket. The thickness of the O-ring 72 is greater than the distance from the bottom of the gasket groove 71 to the inside surface of the circular cylindrical through-hole 26A. The O-ring 71 is squeezed between the bottom of the gasket groove 71 and the inside surface of the circular cylindrical through-hole 26A, and this closes-off the gap between the circular cylindrical section 70A and the circular cylindrical through-hole 26A in a water-tight configuration. Further, the outside of each non-circular cylindrical section 70B is slightly smaller than the inside of each non-circular cylindrical through-hole 26B to allow smooth insertion of each metal rod 70 into a circular cylindrical through-hole 26A.

The output terminal 7 metal rods 70 are provided with screw-holes 73, 74 at both ends. As shown in Figs. 8 and 9, external lead 76 contact terminals 77 are connected by set screws 75 in the screw-holes 73 at the front ends of the metal rods 70. Output terminal 7 metal rods 70 are attached to the output terminal lead-plates 8 by connection screws 87 in the screw-holes 74 at the rear ends of the metal rods 70.

The metal rods 70, which are the output terminals 7, have an overall length that allows attachment of the rear ends to the output terminal lead-plates 8, and allows exposure of the front ends from the surface of the external case 2. Further, the length of the metal rods 70 allows protrusion of the front ends from the bottoms of the recesses 28A in the connecting blocks 28 established outside the perimeter walls 21 of the external case 2. An output terminal 7, which has a front end that protrudes out from the bottom of a connecting block 28 recess 28A, allows reliable attachment of an external lead 76 contact terminal 77. This is because an external lead 76 contact terminal 77 can contact the surface of the front end of the output terminal 7 metal rod 70 for solid attachment via a set screw 75 without touching the bottom of the recess 28A.

### [circuit board]

The circuit board 35 that is connected to each lead-plate 3 has electronic parts mounted to implement battery 1 charging control circuitry, protection circuitry, and remaining battery capacity computation circuitry. In addition, the circuit board 35 acquires and computes various data such as remaining capacity, abnormal conditions, discharge suspension (commands), and charging suspension (commands). These data are transmitted via lead wires 37 to the electrical equipment that is supplied with power from the battery system (for example, an electric powered two-wheeled vehicle). The electrical equipment performs various control operations based on these data. In the external case 2 shown in Fig. 1, the attachment extension 22 on one side (the left side in Fig. 1) is provided with a lead wire opening 22A to pass the lead wires 37. The lead wires 37 are run to the outside through the lead wire opening 22A.

As shown in Figs. 4-7, the circuit board 35 is attached to the upper surface of the battery holder 11. The battery holder 11 is provided with a plurality of alignment ribs 18, which are formed in single-piece construction with the battery holder 11, around the circuit board 35 to align the circuit board 35 in a specified position. The circuit board 35 is guided into a specified position surrounded by the alignment ribs 18 on the upper surface of the battery holder 11, and fastened in that position by screws.

The protection circuitry mounted on the circuit board 35 is circuitry such as a circuit to detect battery 1 over-charging and over-discharging and to control current, and a circuit to detect battery over-charging and cut-off current. To detect battery 1 over-charging and over-discharging, the protection circuitry is provided with a voltage detection circuit (not illustrated) that detects battery 1 voltage. The voltage detection circuit detects the voltage of the batteries 1 via the lead-plates 3 and prevents over-charging and over-discharging.

### [service plug]

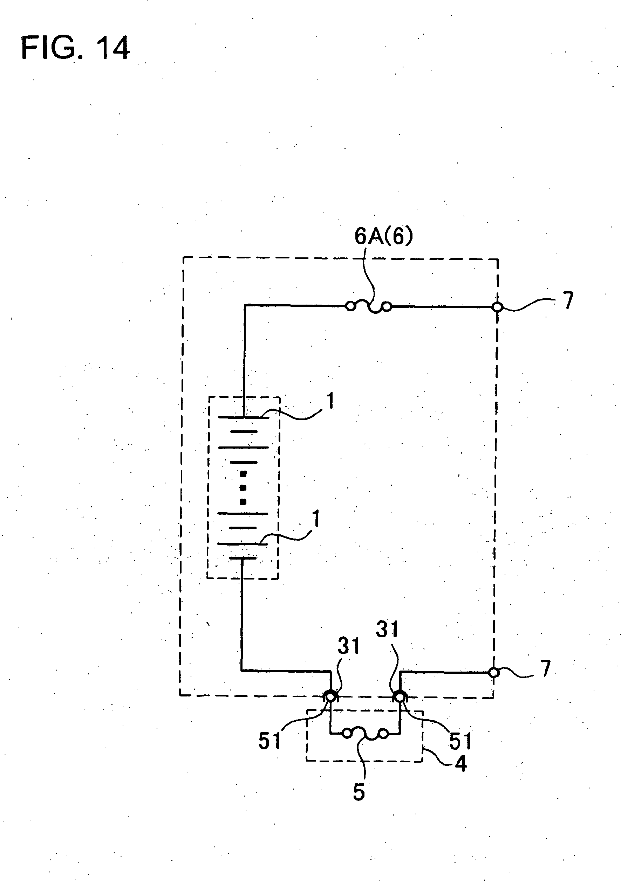

As shown in the circuit diagram of Fig. 14, the service plug 4 is connected on one side of the output in series with the plurality of batteries 1. When the service plug 4 is inserted in the external case 2, the series-connected batteries 1 are connected via the fuse 5 housed in the service plug 4. When the service plug 4 is removed from the external case 2, one end of the connected batteries 1 is opened and no voltage is established across the positive and negative output terminals 7. The service plug 4 is removed until the battery system is installed in an electric vehicle. The service plug 4 is also removed when maintenance work is performed to prevent output of high voltage from the output terminals 7. The service plug 4 is inserted in the external case 2 when the battery system is installed for use in an electric vehicle.

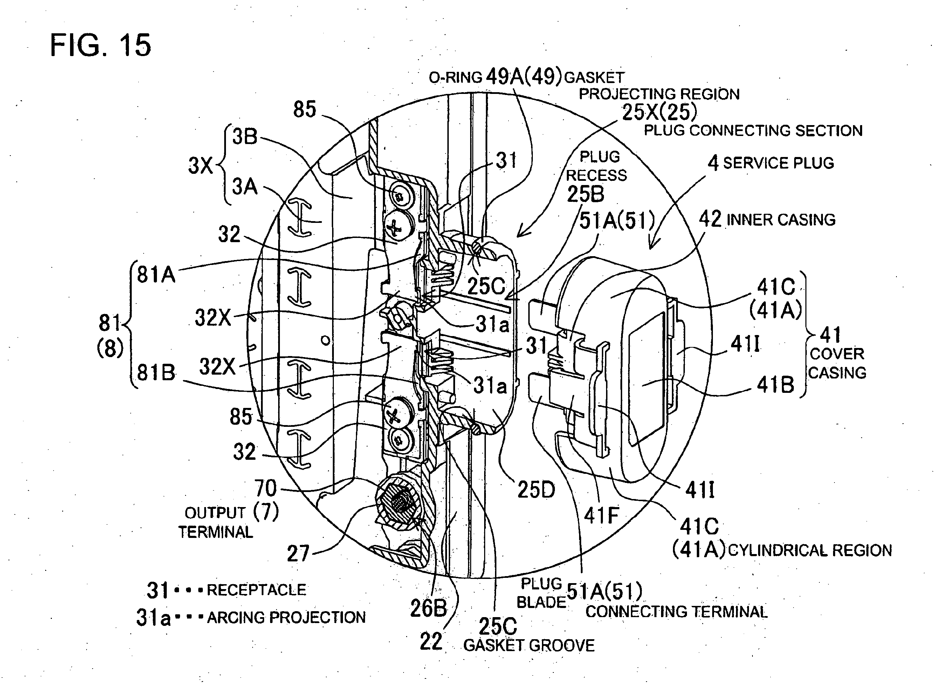

The service plug 4 is shown in Figs. 15-19. The service plug 4 is provided with a plastic plug case 40 that connects to the external case 2 in a detachable manner, a fuse 5 housed inside the plug case 40, and a pair of connecting terminals 51 connected to the fuse 5. The plug case 40 is provided with a cover casing 41 having a cylindrical region 41A that mates with the plug connecting section 25, and an inner casing 42 attached to the inside of the cover casing 41 cylindrical region 41A to hold the fuse 5.

The cover casing 41 is formed from plastic as a single-piece having a long narrow cover cap 41B with semicircular end regions, and cylindrical side-walls 41C established around the cover cap 41B. The cover cap 41B is provided with connecting bosses 41D at both ends to connect the inner casing 42. The connecting bosses 41D have circular cylindrical shapes and project vertically from the inside surface of the cover cap 41B. The ends of the connecting bosses 41D are provided with screw-holes 41E to screw in set screws 43.

The cover casing 41 is provided with locking hooks 41F on both sides of the cylindrical side-walls 41C. The cylindrical side-walls 41C are formed in a cylindrical shape with smooth inside surfaces, and are formed with tapered inside surfaces that become wider towards the open end of the cover casing 41. The tapered cylindrical side-walls 41C can smoothly connect with the plug connecting section 25 on the external case 2 and make a more reliable water-tight connection via the gasket 49. This is because when the plug connecting section 25 is inserted into the cylindrical side-walls 41C, the interior of the cylindrical side-walls 41C gradually becomes smaller with insertion, and compression of the gasket 49 gradually increases. However, the cylindrical side-walls can be formed with a straight cylindrical inside shape as well.

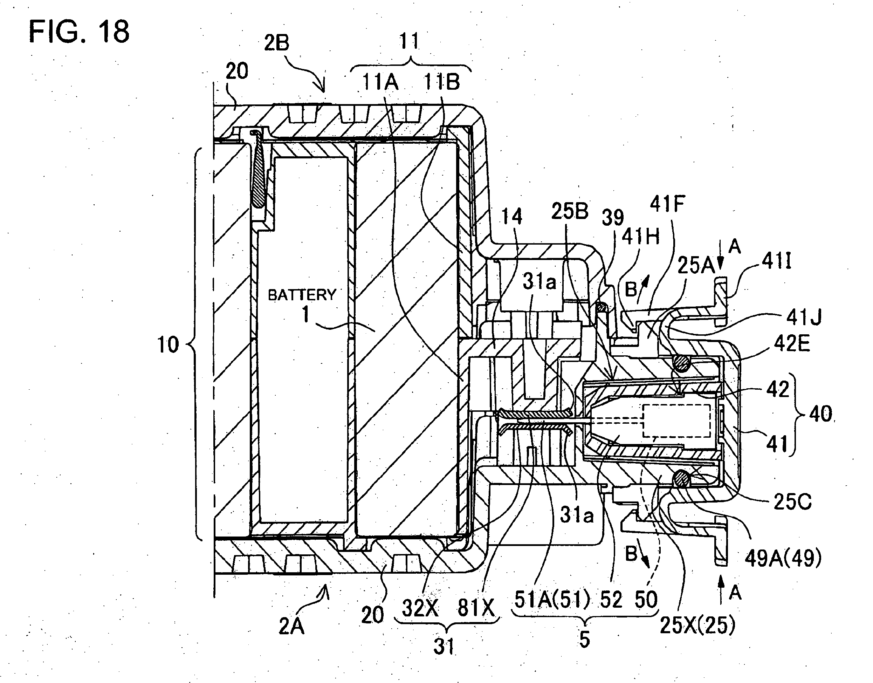

The locking hooks 41F lock into locking catches 25A established on the external case 2 to reliably attach the service plug 4 to the external case 2. The locking hooks 41F connect to the cylindrical side-walls 41C through a pair of flexible arms 41G. The flexible arms 41G are formed in J-shapes that dispose the locking hooks 41F in a manner that allows the locking hooks 41F to flexibly angle outward from the cylindrical side-walls 41C. Further, the insides of the front ends of the locking hooks 41F are provided with hook projections 41H that lock into the locking catches 25A on the external case 2. The back ends of the locking hooks 41F are provided with release tabs 41I to move the locking hooks 41F outward and detach the service plug 4 from the external case 2. When the release tabs 41I are squeezed towards the cylindrical side-walls 41C, the locking hooks 41F are moved in a direction to release the front end hook projections 41H from the external case 2 locking catches 25A. By squeezing the release tabs 41I established on both sides of the cover casing 41 in the direction of the arrows A in Fig. 18, and pressing both release tabs 41I towards the cylindrical side-walls 41C, the locking hooks 41F on both sides move in the direction shown by the arrows B in Fig. 18 allowing the service plug 4 to be easily detached from the external case 2. When the release tabs 41I are not squeezed together, the hook projections 41H on the ends of the locking hooks 41F are latched into the external case 2 locking catches 25A, and the service plug 4 is solidly attached to the external case 2.

The inner casing 42 is molded as a single-piece having rectangular cylindrical enclosure walls 42C to contain a fuse 5 inside, and a base plate 42B that connects the base of the enclosure walls 42C. Connecting holes 42D are established outside both ends of the inner casing 42 enclosure walls 42C to pass the connecting bosses 41D provided on the cover casing 41. The connecting bosses 41D are passed through the connecting holes 42D and set screws 43 are screwed into the connecting bosses 41D to connect the inner casing 42 in a given location in the cover casing 41. The outline of the inner casing 42, or more specifically the outline of the enclosure walls 42C, is formed in a shape that can fit into the plug recess 25B provided in the external case 2 plug connecting section 25.

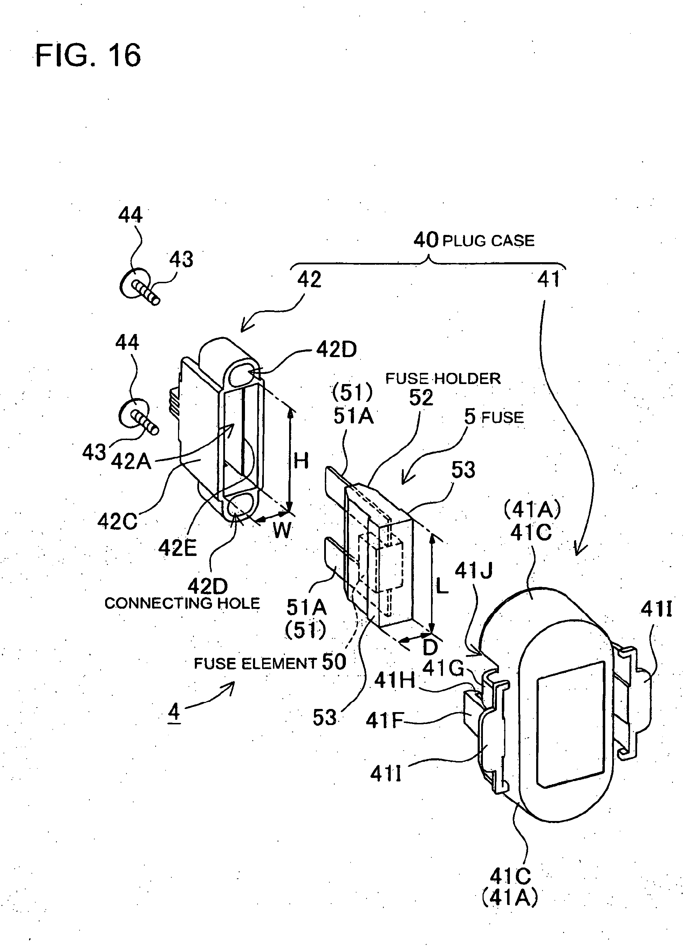

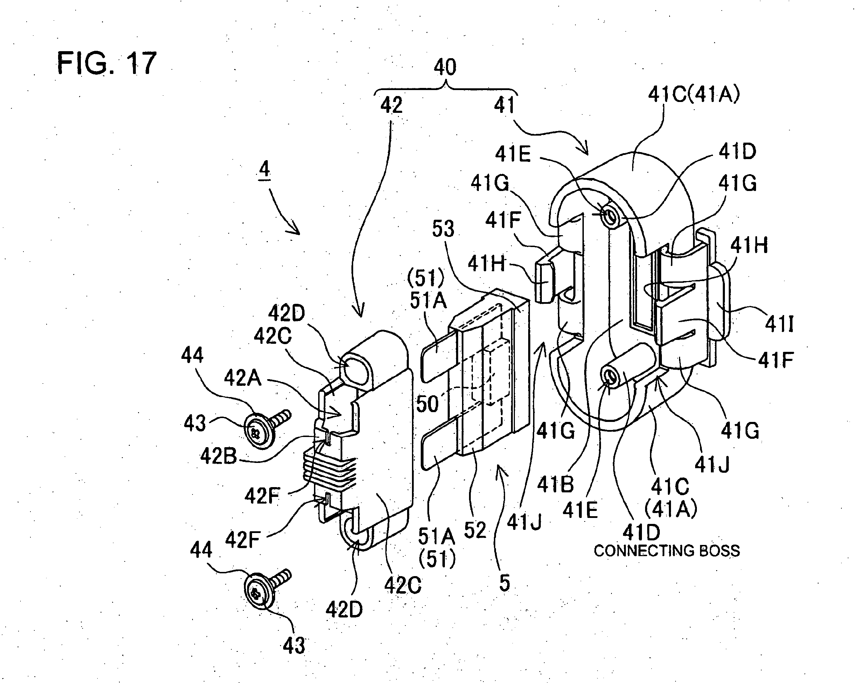

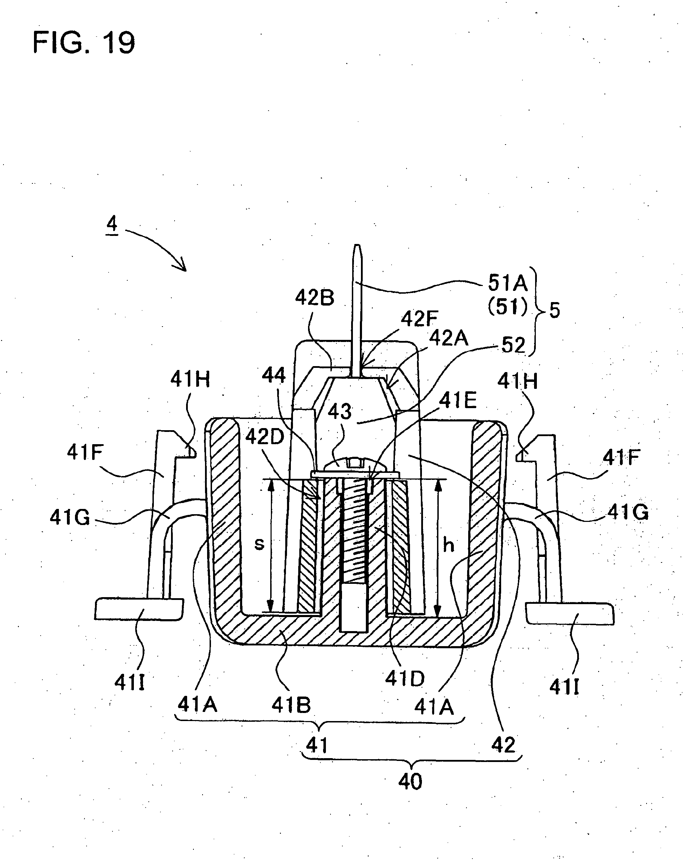

In addition, the inner casing 42 is connected to the cover casing 41 in a floating structure that connects the fuse 5 connecting terminals 51 to the plug case 40 in a floating configuration. Here, the insides of the inner casing 42 connecting holes 42D are made larger than the outside diameters of the connecting bosses 41D to join the inner casing 42 to the cover casing 41 in a floating configuration. The inner casing 42 of Figs. 16 and 17 has long connecting holes 42D shaped as elongated circles, and the connecting bosses 41D inserted through the connecting holes 42D can move inside those elongated circular shaped holes. This allows relative movement of the inner casing 42 with respect to the cover casing 41. For the inner casing 42 to move smoothly inside the cover casing 41, the connecting bosses 41D must move smoothly inside the connecting holes 42D. Therefore, the height (h) of the connecting bosses 41D of the plug case 40 shown in Fig. 19 is made somewhat longer than the axial length (s) of the connecting holes 42D, and the set screws 43 are screwed into the connecting bosses 41D through wide-brimmed washers 44. The outline of the wide-brimmed washers 44 is made larger than the inside of the connecting holes 42D to prevent the connecting holes 42D at both ends of the inner casing 42 from coming off the connecting bosses 41D.

The long dimension of the elongated circular connecting holes 42D of the inner casing 42 of the figures is established in the direction of the plug blade 51A thickness. The inside diameter of the connecting holes 42D in the direction of the plug blade 51A width, which is perpendicular to the thickness direction, is made essentially equal to the outside diameter of the connecting bosses 41D, or is made slightly larger than the outside diameter of the connecting bosses 41D. The inside dimension of the connecting holes 42D is made greater than the outside diameter of the connecting bosses 41D in the thickness direction of the plug blades 51A, and the connecting bosses 41D inserted through the connecting holes 42D can move relative to the connecting holes 42D in the thickness direction of the plug blades 51A. This structure establishes a floating configuration that allows the connecting terminals 51 to move inside the plug case 40 in the thickness direction of the plug blades 51A. The inside dimension of the connecting holes 42D in the elongated direction can be made, for example, 1.05 to 3 times the outside diameter of the connecting bosses 41D, and preferably 1.1 to 2 times the outside diameter of the connecting bosses 41D for an ideal connecting terminal 51 floating configuration. Further, a floating configuration can also be established that allows the connecting terminals to move in the width direction of the plug blades. Here, the inside dimension of the connecting holes is made greater than the outside diameter of the connecting bosses in the width direction of the plug blades. This establishes a floating configuration that allows relative movement of the connecting bosses inside the connecting holes in the width direction of the plug blades. A floating configuration that allows movement of the connecting terminals 51 in the thickness direction of the plug blades can connect the connecting terminals 51 in the receptacles 31 in an ideal state. Further, a floating configuration that allows movement of the connecting terminals 51 in both the thickness and width directions of the plug blades can also connect the connecting terminals 51 in the receptacles 31 in an ideal state while allowing connection in an ideal water-tight manner. In the battery system of the present invention, a floating configuration that allows movement of the connecting terminals 51 in the plug blade 51A thickness direction only can connect the connecting terminals 51 in the receptacles 31 in an ideal manner with no excessive effort. Therefore, a floating configuration that allows movement only in the thickness direction can be employed.

The inner casing 42 is provided with a fuse 5 compartment 42A established by the base plate 42B and the enclosure walls 42C. The depth of the fuse compartment 42C is large enough to hold the fuse 5 inside. As shown in Fig. 16, the inside width (W) of the fuse compartment 42A, which is the narrow distance between the pair of parallel opposing enclosure walls 42C, is made essentially equal to the thickness (D) of the fuse 5, or is made slightly larger. In addition, the inside length (H) of long side of the fuse compartment 42A is made essentially equal to the long dimension (L) of the fuse 5, or is made slightly larger to allow the fuse 5 to be held in a fixed position inside the fuse compartment 42C. The inside of the inner casing 42 shown in Figs. 16 and 18 is provided with stepped recesses 42E at the open end of the enclosure walls 42C. The stepped recesses 42E accept insertion of the detachment ridges 53 established on both sides of the fuse 5.

As shown in Fig. 17, both sides of the base plate 42B are provided with insertion regions 42F to enable smooth insertion and retraction of the connecting terminal 51 plug blades 51A connected to the fuse 5. Since the service plug 4 connecting terminals 51 of the figures are metal-plate plug blades 51A, the insertion regions 42F are slit-shaped. Since the service plug 4 has a pair of plug blades 51A disposed in a common plane, the pair of slit-shaped insertion regions 42F is disposed in a straight-line. The pair of insertion regions 42F disposed in a straight-line is a pair of slits long enough to align the inside sections of the pair of plug blades 51A while guiding opposing outside sections to project outside. The width of the slit-shaped insertion regions 42F, which is perpendicular to the long dimension of the slits, is made essentially equal to the thickness of the connecting terminal 51 plug blades 51A, or is made slightly larger to dispose the connecting terminal 51 plug blades 51A in specified positions inside the inner casing 42. Further, the distance between the slit-shaped insertion regions 42F is essentially equal to the distance between connecting terminal 51 plug blades 51A. This disposes the connecting terminals 51 inside the inner casing 42 in a manner that does not shift in the direction of the blade width. However, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits is made essentially equal to the lateral width of the connecting terminals to allow insertion of the connecting terminals in a manner that does not shift laterally (in the width direction).

The fuse 5 is provided with a fuse element 50 that has connecting terminals 51 connected at both ends, and a fuse holder 52 that retains the fuse element 50. The fuse element 50 is a device that fuses open with excessive current. The fuse element 50 has a specified fusing current set lower than that of the previously described protection device 6 fuse 6A. If excessive current flows in a battery system of this configuration, the fuse element 50 in the service plug 4 will fuse open to cut-off current before the protection device 6 fuse 6A can fuse open. Consequently, current can be cut-off without fusing open the protection device 6 fuse 6A. A fuse 5 that has fused open can be replaced by exchanging the service plug 4 for one having a new fuse. This type of fuse 5 is generally an off-the-shelf commercially available item.

The fuse holder 52 is made of plastic and contains a fuse element 50 inside. The plug blades 51A of the connecting terminals 51 are connected to both ends of the fuse element 50 and insertion molded in fixed positions in the fuse holder 52. The connecting terminal 51 plug blades 51A are metal plates held in the fuse holder 52 with the pair of plug blades 51A in a common plane. The fuse holder 52 of the fuse 5 is housed in the inner casing 42 fuse compartment 42A with the connecting terminal 51 plug blades 51A inserted through the slit-shaped insertion regions 42F to project to the outside.

The service plug 4 described above connects the inner casing 42, which houses the fuse 5, to the cover casing 41 in a floating configuration that allows the inner casing 42 to move with respect to the cover casing 41. This connects the connecting terminals 51 in a floating configuration in the plug case 40. However, although not illustrated, the connecting terminals can also be connected in a floating configuration in the plug case by housing the fuse in a floating configuration in the inner casing.

In this type of floating configuration, the fuse can be housed inside the inner casing fuse compartment in a floating manner. The depth of the fuse compartment is made slightly larger than the length of the fuse in the direction of insertion to allow the fuse to move freely inside. In addition, the inside width (W) of the fuse compartment, which is the narrow distance between the pair of parallel opposing enclosure walls, is made larger than the thickness (D) of the fuse. This holds the connecting terminal plug blades, which are connected to the fuse, in a floating configuration that allows movement in the direction of the plug blade thickness. Further, the inside length (H) of long side of the fuse compartment enclosure walls can be made longer than the long dimension (L) of the fuse to establish a floating configuration that allows the connecting terminals to move in the lateral width direction of the plug blades, which is perpendicular to the thickness direction. A floating configuration that allows movement of the connecting terminals in the thickness direction of the plug blades can connect the connecting terminals in the receptacles in an ideal state. Further, a floating configuration that allows movement of the connecting terminals in both the thickness and width directions of the plug blades can also connect the connecting terminals in the receptacles in an ideal state while allowing connection in an ideal water-tight manner. In this battery system, since a floating configuration that allows movement of the connecting terminals in the plug blade thickness direction only can connect the connecting terminals and receptacles in an ideal manner with no excessive effort, a floating configuration allowing movement only in the thickness direction can be adopted.

Further, the slit-shaped insertion regions provided on both sides of the inner casing base plate can be made wider than the thickness of the connecting terminal plug blades to allow movement in the direction of plug blade thickness. The distance between the slit-shaped insertion regions can also be made shorter than the distance between the pair of connecting terminals to allow movement of the connecting terminals in the lateral width direction of the plug blades. Further, the width of the base plate of the inner casing can also be extended to the width of the pair of connecting terminals, and the slit-shaped insertion regions can extend to both sides of the base plate to allow smooth insertion and retraction of the plug blades. Here, the length of the insertion region slits can be made longer the lateral width of the connecting terminals to allow the connecting terminals to move laterally in the lengthwise direction of the slits. In this type of floating configuration, the fuse is housed in a floating configuration inside the inner casing fuse compartment. The connecting holes at both ends of the inner casing are connected to the cover casing connecting bosses in a manner that does not allow relative movement. This attaches the inner casing in a fixed position in the cover casing.

### [plug connecting section]

The external case 2 of Fig. 15 has a plug connecting section 25 provided with a projecting region 25X that projects out from the surface of the external case 2. The plug connecting section 25 projecting region 25X has a gasket 49 disposed around its entire perimeter. The plug connecting section 25 projecting region 25X is provided with a gasket groove 25C around its perimeter to dispose the gasket 49. An O-ring 49A gasket 49 is disposed in the gasket groove 25C. The O-ring 49A gasket 49 protrudes out from the surface of the projecting region 25X and is resiliently compressed by the inside surface of the service plug 4 cylindrical region 41A to connect the service plug 4 in a water-tight configuration. The gasket 49 makes tight contact with the inside of the cylindrical side-walls 41C, which form the service plug 4 cylindrical region 41A, to connect the service plug 4 in a water-tight manner. The service plug 4 shown in Fig. 17 is provided with cut-outs 41J on both sides of the cylindrical side-walls 41C, and the locking hooks 41F are established in those cut-outs 41J. As shown in Fig. 18, the gasket 49 is inserted further into the cylindrical side-walls 41C than the position of the cut-outs 41J to connect the cylindrical region 41A in a water-tight configuration. Specifically, the gasket groove 25C is positioned to insert the gasket 49 further inside the cylindrical side-walls 41 than the location of the cut-outs 41J. The gasket 49 is sandwiched between the inside surface of the service plug 4 cylindrical region 41A and the outside surface of the plug connecting section 25 projecting region 25X to join the service plug 4 to the external case 2 in a water-tight configuration.

The plug connecting section 25 is provided with locking catches 25A that project from both sides to mate with the service plug 4 locking hooks 41F. The locking catches 25A are established in positions that can interlock with the hook projections 41H on the ends of the locking hooks 41F when the service plug 4 is connected in a fixed position. This connects the service plug 4 to the external case 2 in a manner that does not unintentionally come apart.

The inside of the plug connecting section 25 is provided with a plug recess 25B for insertion of the service plug 4 inner casing 42. This plug connecting section 25 is provided with connecting walls 25D, and the plug recess 25B is established inside the connecting walls 25D. The gasket groove 25C is established on the outside surface of the connecting walls 25D, and the O-ring 49A gasket 49 is disposed in that gasket groove 25C. The inside of the connecting walls 25D is shaped to accept insertion of the inner casing 42 of the service plug 4. The connecting walls 25D are formed in a shape that allows insertion between the cover casing 41 cylindrical side-walls 41C and the inner casing 42 enclosure walls 42C. The service plug 4 inner casing 42 is inserted into the plug recess 25B in the plug connecting section 25, and the connecting walls 25D are inserted into the service plug 4 cylindrical region 41A to connect the service plug 4 in a fixed position. With the service plug 4 in the connected position, the locking hooks 41F interlock with the locking catches 25A to connect the service plug 4 in a manner that does not disconnect unintentionally.

Further, the external case 2 has a pair of receptacles 31 mounted in a position to accept insertion of the service plug 4 connecting terminals 51 when the service plug 4 is connected to the plug connecting section 25. The receptacles 31 of Figs. 4, 11 and 15 are made up of output terminal lead-plate 8 pieces and flexible metal plates 32. As shown in Fig. 18, the connecting terminals 51 are inserted between the output terminal lead-plate 8 pieces and the flexible metal plates 32 of the receptacles 31. The output terminal lead-plate 8 is made up of the first lead-plate 81A, which is a lead-plate piece 81 connected to the output-side of the batteries 1, and the second lead-plate 81 B, which is a lead-plate piece 81 connected to an output terminal 7. The service plug 4 connects the first lead-plate 81A and the second lead-plate 81 B to connect the output terminal 7 to the output-side of the batteries 1. The front ends of the first lead-plate 81 A and the second lead-plate 81 B are separated by a specified distance, and contact regions 81 X that form the contacts of the receptacles 31 are disposed in a common plane and in a straight-line. The back ends of the flexible metal plates 32 are attached to the output terminal lead-plate 8 pieces 81 to form flexible contacts 32X at the front ends. The gap between the flexible metal plate 32 flexible contacts 32X and the output terminal lead-plate 8 contact regions 81 X is made smaller than the thickness of the connecting terminals 51. This forms a structure in which the flexible contacts 32X press the inserted connecting terminals 51 resiliently against the contact regions 81X to electrically connect the receptacles 31 to the connecting terminals 51.

In addition, the receptacles 31 shown in Figs. 11, 15, and 18 are provided with arcing projections 31a on the connecting terminal 51 insertion-side. The arcing projections 31a of the figures project from the connecting terminal 51 insertion-sides of the ends of the output terminal lead-plate 8 contact regions 81X and the opposing flexible metal plate 32 flexible contacts 32X. Each pair of opposing arcing projections 31a are inclined and taper to a wider gap towards the insertion-side of the connecting terminals 51. This allows the connecting terminal 51 plug blades 51A to smoothly insert into the wider gap. In this type of structure with arcing projections 31a established on the receptacles 31, the insertion ends of the connecting terminal 51 plug blades 51 A first contact the arcing projections 31a when the service plug 4 is plugged in for electrical connection. As a result, electrical arcing is confined to contact regions between the arcing projections 31a and the tips of the connecting terminal 51 plug blades 51A. Therefore, dirt generated from carbonized material and surface roughness due to arcing result only at those initial contact regions. In particular, the width of the arcing projections 31a on the receptacles 31 in the figures is made narrower than the connecting terminal 51 plug blades 51A. This makes it easier for arcing to occur between the opposing arcing projections 31a and the tips of the inserted connecting terminal 51 plug blades 51A. In this manner, dirt and roughness generated by arcing during connecting terminal 51 insertion are limited to regions at the tips of the connecting terminals 51 and receptacles 31. This maintains the central electrical connecting surfaces of the connecting terminals 51 and the receptacles 31 in a clean, smooth condition. Consequently, with the connecting terminals 51 inserted between the flexible contacts 32X and contact regions 81X of the receptacles 31, the connecting terminals 51 and receptacles 31 can make stable contact with clean surfaces for reliable low resistance electrical connection.

The battery system described above is assembled in the following manner.
(1) As shown in Fig. 7, a plurality of batteries 1 are inserted with prescribed orientation (polarity) into the battery holder 11. The batteries 1 of the figures are inserted in the same direction (polarity) in vertical columns, and in alternating reverse directions (polarities) in lateral left-to-right rows. After loading all the batteries 1 in the battery holder 11 battery loading sections 12, the pair of battery holder 11 pieces are fastened together.
(2) As shown in Fig. 6, the circuit board 35 is mounted on top of the battery holder 11. The circuit board 35 is aligned inside the alignment ribs 18 on the upper surface of the battery holder 11 and attached via screws.
(3) The lead-plates 3 are positioned inside the recessed regions 13 of the battery holder 11 and weld-attached to the electrodes 1A at the ends of each battery 1. The lead-plates 3 are weld-attached to the battery 1 electrodes 1A exposed from the open ends of the battery holder 11 battery loading sections 12 by a technique such as spot-welding or laser-welding. Adjacent lead-plates 3 are disposed in columns separated by insulating gaps 34 to avoid contact. Lead-plate 3 extensions 3a are connected to the circuit board 35 via leads 36.
(4) As shown in Figs. 11 and 12, output terminal lead-plates 8 are mounted on the attachment plates 14 at both ends of the battery holder 11, and the output terminal lead-plates 8 are connected to the output lead-plates 3X.
(5) Positive and negative output terminal 7 metal rods 70 are attached to the positive and negative output terminal lead-plates 8 mounted on the attachment plates 14. Here, the metal rods 70 are attached while aligning them for insertion through the external case 2 through-holes 26 in the following step. The previous steps assemble the battery assembly 10.
(6) The battery assembly 10 is inserted into the first external case 2A. At this time, the output terminal 7 metal rods 70 are inserted through the through-holes 26 in the first external case 2A. The rear ends of the positive and negative output terminals 7 are attached to the output terminal lead-plates 8 and the front ends are exposed outside the surface of the external case 2.
(7) The first external case 2A and second external case 2A are joined together. A gasket 39 is sandwiched between the connecting surfaces at the perimeter walls 21 of the first external case 2A and the second external case 2B, and the external case 2 is fastened together in a water-tight manner with case attachment screws 38.

The battery system of the present invention is optimally suited for outdoor electric powered vehicle applications such as an electric motor bike, electric bicycle, hybrid car, or electric vehicle. The battery system is also optimally suited for use as a power supply for various electrical equipment that require high power.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the spirit and scope of the invention as defined in the appended claims.

The present application is based on Application No. 2010-015522 filed in Japan on January 27, 2010, the content of which is incorporated herein by reference.

### LABELS

1 BATTERY
1A ELECTRODE
2 EXTERNAL CASE
2A FIRST EXTERNAL CASE
2B SECOND EXTERNAL CASE
3 LEAD-PLATE
3X OUTPUT LEAD-PLATE
3A BATTERY CONNECTING SECTION
3B OUTPUT EXTENSION
3a LEAD-PLATE EXTENSIONS
3b BENT END-SECTION
4 SERVICE PLUG
5 FUSE
6 PROTECTION DEVICE
6A FUSE
7 OUTPUT TERMINAL
8 OUTPUT TERMINAL LEAD-PLATE
10 BATTERY ASSEMBLY
11 BATTERY HOLDER
11A FIRST BATTERY HOLDER
11 B SECOND BATTERY HOLDER
12 BATTERY LOADING SECTION
13 RECESSED REGION
14 ATTACHMENT PLATE
15 ATTACHMENT BOSS
16 MOUNTING PROJECTION
17 THROUGH-HOLE
18 ALIGNMENT RIB
19 CASE-MOUNTING PIECE
19A CASE-MOUNTING RECESS
20 SURFACE PLATE
21 PERIMETER WALL
22 ATTACHMENT EXTENSION
22A LEAD WIRE OPENING
23 SCREW-HOLE
24 BOSS
25 PLUG CONNECTING SECTION
25X PROJECTING REGION
25A LOCKING CATCH
25B PLUG RECESS
25C GASKET GROOVE
25D CONNECTING WALLS
26 THROUGH-HOLES
26A CIRCULAR CYLINDRICAL THROUGH-HOLE
26B NON-CIRCULAR CYLINDRICAL THROUGH-HOLE
27 CYLINDRICAL PROJECTION
28 CONNECTING BLOCK
28A RECESS
29 SCREW BOSS
29A SCREW-HOLE
30 SLIT
30A VERTICAL SLIT
30B HORIZONTAL SLIT
31 RECEPTACLE
31a ARCING PROJECTION
32 FLEXIBLE METAL PLATE
32X FLEXIBLE CONTACT
33 SET SCREW
34 INSULATING GAP
35 CIRCUIT BOARD
36 LEAD
37 LEAD WIRES
38 CASE ATTACHMENT SCREW
39 GASKET
40 PLUG CASE
41 COVER CASING
41A CYLINDRICAL REGION
41B COVER CAP
41C CYLINDRICAL SIDE-WALLS
41D CONNECTING BOSS
41E SCREW-HOLE
41F LOCKING HOOK
41G FLEXIBLE ARM
41H HOOK PROJECTION
41I RELEASE TAB
41J CUT-OUT
42 INNER CASING
42A FUSE COMPARTMENT
42B BASE PLATE
42C ENCLOSURE WALLS
42D CONNECTING HOLE
42E STEPPED RECESS
42F INSERTION REGION
43 SET SCREW
44 WIDE-BRIMMED WASHER
49 GASKET
49A O-RING
50 FUSE ELEMENT
51 CONNECTING TERMINAL
51A PLUG BLADE
52 FUSE HOLDER
53 DETACHMENT RIDGE
70 METAL ROD
70A CIRCULAR CYLINDRICAL SECTION
70B NON-CIRCULAR CYLINDRICAL SECTION
71 GASKET GROOVE
72 O-RING
73 SCREW-HOLE
74 SCREW-HOLE
75 SET SCREW
76 EXTERNAL LEAD
77 CONTACT TERMINAL
81 LEAD-PLATE PIECE
81A FIRST LEAD-PLATE
81B SECOND LEAD-PLATE
81X CONTACT REGION
81a ATTACHMENT SECTION
81b CONNECTION SECTION
81c UPRIGHT SECTION
81d MOUNTING HOLE
81e THROUGH-HOLE
81f THROUGH-HOLE
82 LEAD-PLATE PIECE
82e THROUGH-HOLE
82f THROUGH-HOLE
85 SET SCREW
87 CONNECTION SCREW

## Claims

1. A battery system comprising:
an external case (2) housing a plurality of batteries (1); and
a service plug (4) that connects to the external case (2) in a detachable manner; the service plug (4) comprising:
a plug case (40) that connects to the external case (2) in a detachable manner;
a fuse (5) housed in the plug case (40); and
a pair of connecting terminals (51) connected to the ends of the fuse (5); the external case (2) comprising:
output terminals (7) connected to the batteries (1);
a plug connecting section (25) for connection of the plug case (40); and
receptacles (31) for insertion and connection of the service plug (4) connecting terminals (51) when the plug case (40) is connected with the plug connecting section (25),
wherein the connecting terminals (51) electrically connect to the receptacles (31) when the plug case (40) of the service plug (4) is connected with the plug connecting section (25); and the fuse (5) is connected to the batteries (1) through the connecting terminals (51) and receptacles (31) to output voltage across the output terminals (7);
**characterized in that**
a gasket (49) is provided between the plug case (40) and the plug connecting section (25);
the gasket (49) is sandwiched between the plug case (40) and the plug connecting section (25) for a water-tight connection so that the service plug (4) is connected to the external case (2) in a water-tight configuration via the gasket (49);
the connecting terminals (51) are connected to the plug case (40) in a mechanically floating configuration that allows the connecting terminals (51) to move relative to the plug case (40) and perpendicular to the insertion direction,
the plug case (40) is provided with a cover casing (41) having a cylindrical region (41A), and an inner casing (42) housing a fuse (5) connected inside the cover casing (41),
the inner casing (42) is connected to the cover casing (41) in a mechanically floating configuration that allows the inner casing (42) to move with respect to the cover casing (41); and the connecting terminals (51) of the fuse (5) housed inside the inner casing (42) are connected to the plug case (40) in a mechanically floating configuration,
the inside of the cover casing (41) cylindrical region (41A) has connecting bosses (41 D) to connect the inner casing (42); the inner casing (42) is provided with connecting holes (42D) to insert the connecting bosses (41 D); the inner casing (42) connects to the cover casing (41) in a configuration that inserts the connecting bosses (41 D) through the connecting holes (42D); the inside shape of the connecting holes (42D) is made larger than the outside of the connecting bosses (41D); and the inner casing (42) is connected to the cover casing (41) in a mechanically floating configuration, and
the pair of connecting terminals (51) is a pair of plug blades (51A) that is two metal plates disposed in a common plane; and the connecting holes (42D) are elongated holes that allow the connecting terminals (51) to move in the direction of the thickness of the plug blades (51A).

2. The battery system as cited in claim 1 wherein the pair of connecting terminals (51) is a pair of plug blades (51A) that is two metal plates disposed in a common plane; and the connecting terminals (51) are connected to the plug case (40) in a mechanically floating configuration that allows movement in the direction of the thickness of the plug blades (51A).

3. The battery system as cited in claim 2 wherein the external case (2) plug connecting section (25) has a projecting region (25X) that projects out from the surface of the external case (2); a gasket (49) is disposed around the entire perimeter of the projecting region (25X); the plug case (40) has a cylindrical region (41A) for insertion of the plug connecting section (25) projecting region (25X); and the gasket (49) is sandwiched between the inside of cylindrical region (41A) and the outside of the projecting region (25X) to connect the service plug (4) to the external case (2) in a water-tight configuration.

4. The battery system as cited in claim 3 wherein the perimeter of the plug connecting section (25) projecting region (25X) is provided with a gasket groove (25C) to dispose the gasket (49); and an O-ring (49A) gasket (49) is disposed in the gasket groove (25C).

5. The battery system as cited in claim 1 wherein the cover casing (41) has a cylindrical region (41A) in which the plug connecting section (25) projecting region (25X) inserts.

6. The battery system as cited in claim 1 wherein the external case (2) plug connecting section (25) has a plug recess (25B) for insertion of the inner casing (42), the inner casing (42) is inserted into the plug recess (25B), and the plug connecting section (25) projecting region (25X) is inserted into the cylindrical region (41A) to connect the service plug (4) to the external case (2).

7. The battery system as cited in claim 1 wherein cover casing (41) is formed from plastic as a single-piece having a long narrow cover cap (41 B) with semicircular end regions, and cylindrical side-walls (41 C) established around the perimeter of the cover cap (41B).

8. The battery system as cited in claim 1 wherein the inner casing (42) is provided with a base plate (42B) and enclosure walls (42C) that form a fuse compartment (42A), and the fuse (5) is housed inside the fuse compartment (42A) in a mechanically floating configuration.

9. The battery system as cited in claim 8 wherein the inner casing (42) fuse compartment (42A) is made larger than the fuse (5) in the direction of insertion to allow the fuse to move freely inside; the inside width (W) of the fuse compartment (42A) is made larger than the thickness (D) of the fuse (5); and the connecting terminal (51) plug blades (51A), which are connected to the fuse (5), are housed in a floating configuration that allows movement in the direction of the plug blade (51A) thickness.

10. The battery system as cited in claim 1 wherein the fuse (5) is provided with a fuse element (50) with connecting terminals (51) connected to both ends, and a fuse holder (52) in which the fuse element (50) is mounted; and the fuse holder (52) is held inside the inner casing (42) in a mechanically floating configuration.

11. The battery system as cited in claim 10 wherein the fuse holder (52) is made of plastic and contains the fuse element (50) inside; and the connecting terminal (51) plug blades (51A) connected to both ends of the fuse element (50) are insertion molded in fixed positions in the fuse holder (52).

12. The battery system as cited in claim 1 wherein the cover casing (41) is formed as a single-piece from plastic with cylindrical side-walls (41C) established around a cover cap (41 B); the cover cap (41B) is provided with connecting bosses (41D) at both ends to connect the inner casing (42); the connecting bosses (41D) have circular cylindrical shapes that project at right angles from the inside surface of the cover cap (41 B); and the ends of the connecting bosses (41 D) are provided with screw-holes (41E) to screw in set screws (43).

13. The battery system as cited in claim 12 wherein the height (h) of the plug case (40) connecting bosses (41 D) is made longer than the axial length (s) of the connecting holes (42D); the set screws (43) are screwed into the connecting bosses (41 D) through wide-brimmed washers (44); the outline of the wide-brimmed washers (44) is made larger than the inside of the connecting holes (42D); and the inner casing (42) is prevented from coming off the connecting bosses (41 D).

14. The battery system as cited in claim 12 wherein the inner casing (42) connecting holes (42D) are elongated with the long dimension in the direction of the plug blade (51A) thickness; the inside diameter of the connecting holes (42D) in the direction of the plug blade (51A) width, which is perpendicular to the thickness direction, is made approximately equal to, or slightly larger than outside diameter of the connecting bosses (41 D); the long dimension of the inside of the connecting holes (42D) is made greater than the outside diameter of the connecting bosses (41D) in the thickness direction of the plug blades (51A); and the connecting bosses (41 D) inserted through the connecting holes (42D) can move relative to the connecting holes (42D) in the thickness direction of the plug blades (51A).

15. The battery system as cited in claim 14 wherein the long dimension of the connecting holes (42D) is made 1.05 to 3 times the outside diameter of the connecting bosses (41 D).

16. The battery system as cited in claim 1 wherein locking hooks (41 F) are provided on both sides of the cylindrical side-walls (41C) of the cover casing (41); and the locking hooks (41 F) interlock with locking catches (25A) established on the external case (2) to connect the service plug (4) to the external case (2).

17. The battery system as cited in claim 1 wherein the connecting holes (42D) are provided outside both ends of the inner casing (42) enclosure walls (42C) for insertion of the connecting bosses (41 D) established on the cover casing (41).

18. The battery system as cited in claim 17 wherein the connecting bosses (41 D) are inserted through the connecting holes (42D) and set screws (43) are screwed into the connecting bosses (41 D) to connect the inner casing (42) to the cover casing (41).

19. The battery system as cited in claim 1 wherein the connecting terminal (51) insertion-sides of the receptacles (31) are provided with arcing projections (31a).

20. The battery system as cited in claim 1 that is a battery system installed on-board an electrically powered vehicle.

## Patentansprüche

1. Batteriesystem, umfassend:
ein äußeres Gehäuse (2), das eine Vielzahl von Batterien (1) unterbringt; und
einen Servicestecker (4), der in lösbarer Weise mit dem äußeren Gehäuse (2) verbindet; wobei der Servicestecker (4) umfasst:
ein Steckergehäuse (40), das in lösbarer Weise mit dem äußeren Gehäuse (2) verbindet;
eine Sicherung (5), die im Steckergehäuse (40) untergebracht ist; und
ein Paar von Verbindungsanschlüssen (51), die mit den Enden der Sicherung (5) verbunden sind; wobei das äußere Gehäuse (2) umfasst:
Ausgangsanschlüsse (7), die mit den Batterien (1) verbunden sind;
einen Steckerverbindungsabschnitt (25) zur Verbindung des Steckergehäuses (40); und
Aufnahmen (31) zur Einfügung und Verbindung der Verbindungsanschlüsse (51) des Servicesteckers (4), wenn das Steckergehäuse (40) mit dem Steckerverbindungsabschnitt (25) verbunden ist,
wobei die Verbindungsanschlüsse (51) elektrisch mit den Aufnahmen (31) verbinden, wenn das Steckergehäuse (40) des Servicesteckers (4) mit dem Steckerverbindungsabschnitt (25) verbunden ist; und die Sicherung (5) ist durch die Verbindungsanschlüsse (51) und Aufnahmen (31) mit den Batterien (1) verbunden, um über die Ausgangsanschlüsse (7) eine Spannung auszugeben;
**dadurch gekennzeichnet, dass**
eine Dichtung (49) zwischen dem Steckergehäuse (40) und dem Steckerverbindungsabschnitt (25) vorgesehen ist;
die Dichtung (49) für eine wasserdichte Verbindung zwischen dem Steckergehäuse (40) und dem Steckerverbindungsabschnitt (25) schichtweise eingelegt ist, so dass der Servicestecker (4) in einer wasserdichten Konfiguration über die Dichtung (49) mit dem äußeren Gehäuse (2) verbunden ist;
die Verbindungsanschlüsse (51) mit dem Steckergehäuse (40) in einer mechanisch schwimmenden Konfiguration verbunden sind, welche erlaubt, dass sich die Verbindungsanschlüsse (51) relativ zu dem Steckergehäuse (40) und senkrecht zu der Einfügungsrichtung bewegen,
das Steckergehäuse (40) mit einer Abdeckverkleidung (41), die einen zylindrischen Bereich (41A) aufweist, und mit einer Innenverkleidung (42) versehen ist, die eine Sicherung (5) unterbringt, die innerhalb der Abdeckverkleidung (41) angeschlossen ist,
die Innenverkleidung (42) mit der Abdeckverkleidung (41) in einer mechanisch schwimmenden Konfiguration verbunden ist, welche erlaubt, dass sich die Innenverkleidung (42) in Bezug auf die Abdeckverkleidung (41) bewegt; und die Verbindungsanschlüsse (51) der Sicherung (5), die innerhalb der Innenverkleidung (42) untergebracht ist, sind mit dem Steckergehäuse (40) in einer mechanisch schwimmenden Konfiguration verbunden, das Innere des zylindrischen Bereichs (41A) der Abdeckverkleidung (41) Verbindungsvorsprünge (41D) aufweist, um die Innenverkleidung (42) zu verbinden; wobei die Innenverkleidung (42) mit Verbindungslöchern (42D) versehen ist, um die Verbindungsvorsprünge (41D) einzufügen; die Innenverkleidung (42) mit der Abdeckverkleidung (41) in einer Konfiguration verbunden ist, welche die Verbindungsvorsprünge (41D) durch die Verbindungslöcher (42D) einfügt; die Innenform der Verbindungslöcher (42D) größer gebildet ist als die Außenseite der Verbindungsvorsprünge (41D); und die Innenverkleidung (42) mit der Abdeckverkleidung (41) in einer mechanisch schwimmenden Konfiguration verbunden ist, und
das Paar von Verbindungsanschlüssen (51) ein Paar von Steckerblättern (51A) ist, die zwei Metallplatten sind, die in einer gemeinsamen Ebene angeordnet sind; und die Verbindungslöcher (42D) sind längliche Löcher, welche erlauben, dass sich die Verbindungsanschlüsse (51) in der Richtung der Dicke der Steckerblätter (51A) bewegen.

2. Batteriesystem gemäß Anspruch 1, wobei das Paar von Verbindungsanschlüssen (51) ein Paar von Steckerblättern (51A) ist, die zwei Metallplatten sind, die in einer gemeinsamen Ebene angeordnet sind; und die Verbindungsanschlüsse (51) mit dem Steckergehäuse (40) in einer mechanisch schwimmenden Konfiguration verbunden sind, welche eine Bewegung in der Richtung der Dicke der Steckerblätter (51A) erlaubt.

3. Batteriesystem gemäß Anspruch 2, wobei der Steckerverbindungsabschnitt (25) des äußeren Gehäuses (2) einen Vorsprungsbereich (25X) aufweist, der aus der Oberfläche des äußeren Gehäuses (2) vorspringt; eine Dichtung (49) um den gesamten Umfang des Vorsprungsbereichs (25X) angeordnet ist; das Steckergehäuse (40) einen zylindrischen Bereich (41A) zur Einfügung des Vorsprungsbereichs (25X) des Steckerverbindungsabschnitts (25) aufweist; und die Dichtung (49) zwischen der Innenseite des zylindrischen Bereichs (41A) und der Außenseite des Vorsprungsbereichs (25X) schichtweise angeordnet ist, um den Servicestecker (4) mit dem äußeren Gehäuse (2) in einer wasserdichten Konfiguration zu verbinden.

4. Batteriesystem gemäß Anspruch 3, wobei der Umfang des Vorsprungsbereichs (25X) des Steckerverbindungsabschnitts (25) mit einer Dichtungsnut (25C) versehen ist, um die Dichtung (49) anzuordnen; und in der Dichtungsnut (25C) eine O-Ring-(49A)-Dichtung (49) angeordnet ist.

5. Batteriesystem gemäß Anspruch 1, wobei die Abdeckverkleidung (41) einen zylindrischen Bereich (41A) aufweist, in den der Vorsprungsbereich (25X) des Steckerverbindungsabschnitts (25) eingefügt ist.

6. Batteriesystem gemäß Anspruch 1, wobei der Steckerverbindungsabschnitt (25) des äußeren Gehäuses (2) eine Steckerausnehmung (25B) zur Einfügung der Innenverkleidung (42) aufweist, wobei die Innenverkleidung (42) in die Steckerausnehmung (25B) eingefügt ist, und der Vorsprungsbereich (25X) des Steckerverbindungsabschnitts (25) in den zylindrischen Bereich (41A) eingefügt ist, um den Servicestecker (4) mit dem äußeren Gehäuse (2) zu verbinden.

7. Batteriesystem gemäß Anspruch 1, wobei die Abdeckverkleidung (41) aus Kunststoff als ein einzelnes Stück geformt ist, das eine lange schmale Abdeckkappe (41B) mit Halbkreis-Endbereichen und zylindrische Seitenwände (41C) aufweist, die um den Umfang der Abdeckkappe (41B) gebildet sind.

8. Batteriesystem gemäß Anspruch 1, wobei die Innenverkleidung (42) mit einer Basisplatte (42B) und Gehäusewänden (42C) versehen ist, die ein Sicherungskompartiment (42A) bilden, und die Sicherung (5) innerhalb des Sicherungskompartiments (42A) in einer mechanisch schwimmenden Konfiguration untergebracht ist.

9. Batteriesystem gemäß Anspruch 8, wobei das Sicherungskompartiment (42A) der Innenverkleidung (42) in der Richtung der Einfügung größer gebildet ist als die Sicherung (5), um der Sicherung zu erlauben, nach innen sich frei zu bewegen; die Innenbreite (W) des Sicherungskompartiments (42A) größer als die Dicke (D) der Sicherung (5) gebildet ist; und die Steckerblätter (51A) des Verbindungsanschlusses (51), die mit der Sicherung (5) verbunden sind, in einer schwimmenden Konfiguration untergebracht sind, welche eine Bewegung in der Richtung der Dicke des Steckerblattes (51A) erlaubt.

10. Batteriesystem gemäß Anspruch 1, wobei die Sicherung (5) mit einem Sicherungselement (50) mit Verbindungsanschlüssen (51), die mit beiden Enden verbunden sind, und einem Sicherungshalter (52) versehen ist, in dem das Sicherungselement (50) montiert ist; und der Sicherungshalter (52) ist innerhalb der Innenverkleidung (42) in einer mechanisch schwimmenden Konfiguration gehalten.

11. Batteriesystem gemäß Anspruch 10, wobei der Sicherungshalter (52) aus Kunststoff hergestellt ist und innen das Sicherungselement (50) enthält; und die Steckerblätter (51A) des Verbindungsanschlusses (51), die mit beiden Enden des Sicherungselements (50) verbunden sind, an festen Positionen in dem Sicherungshalter (52) eingeformt sind.

12. Batteriesystem gemäß Anspruch 1, wobei die Abdeckverkleidung (41) als einzelnes Stück aus Kunststoff mit zylindrischen Seitenwänden (41C) geformt ist, die um eine Abdeckkappe (41B) gebildet sind; die Abdeckkappe (41B) an beiden Enden mit Verbindungsvorsprüngen (41D) versehen ist, um die Innenverkleidung (42) zu verbinden; die Verbindungsvorsprünge (41D) kreiszylindrische Formen aufweisen, die mit rechten Winkeln von der inneren Oberfläche der Abdeckkappe (41B) vorstehen; und die Enden der Verbindungsvorsprünge (41D) mit Schraublöchern (41E) versehen sind, um Stellschrauben (43) einzuschrauben.

13. Batteriesystem gemäß Anspruch 12, wobei die Höhe (h) der Verbindungsvorsprünge (41D) des Steckergehäuses (40) länger hergestellt ist als die axiale Länge (s) der Verbindungslöcher (42D); die Stellschrauben (43) durch breitrandige Unterlegscheiben (44) in die Verbindungsvorsprünge (41D) eingeschraubt sind; die Kontur der breiterrandigen Unterlegscheiben (44) größer gebildet ist als die Innenseite der Verbindungslöcher (42D); und die Innenverkleidung (42) gehindert ist, aus den Verbindungsvorsprüngen (41D) zu kommen.

14. Batteriesystem gemäß Anspruch 12, wobei die Verbindungslöcher (42D) der Innenverkleidung (42) mit der Langdimension in der Richtung der Dicke des Steckerblattes (51A) länglich sind; der Innendurchmesser der Verbindungslöcher (42D) in der Richtung der Breite des Steckerblattes (51A), die senkrecht zu der Dickenrichtung ist, ungefähr gleich oder geringfügig größer als der Außendurchmesser der Verbindungsvorsprünge (41D) hergestellt ist; die Langdimension der Innenseite der Verbindungslöcher (42D) größer als der Außendurchmesser der Verbindungsvorsprünge (41D) in der Dickenrichtung der Steckerblätter (51A) hergestellt ist; und die Verbindungsvorsprünge (41D), die durch die Verbindungslöcher (42D) eingefügt sind, sich in der Dickenrichtung der Steckerblätter (51A) relativ zu den Verbindungslöchern (42D) frei bewegen können.

15. Batteriesystem gemäß Anspruch 14, wobei die Langdimension der Verbindungslöcher (42D) gemäß dem 1,05- bis 3-fachen des Außendurchmessers der Verbindungsvorsprünge (41D) hergestellt ist.

16. Batteriesystem gemäß Anspruch 1, wobei Sperrhaken (41F) auf beiden Seiten der zylindrischen Seitenwände (41C) der Abdeckverkleidung (41) vorgesehen sind; und die Sperrhaken (41F) mit Sperrklinken (25A) eingreifen, die auf dem äußeren Gehäuse (2) gebildet sind, um den Servicestecker (4) mit dem äußeren Gehäuse (2) zu verbinden.

17. Batteriesystem gemäß Anspruch 1, wobei die Verbindungslöcher (42D) außerhalb beider Enden der Gehäusewände (42C) der Innenverkleidung (42) zur Einfügung der Verbindungsvorsprünge (41D) vorgesehen sind, die auf der Abdeckverkleidung (41) gebildet sind.

18. Batteriesystem gemäß Anspruch 17, wobei die Verbindungsvorsprünge (41D) durch die Verbindungslöcher (42D) eingefügt sind und Stellschrauben (43) in die Verbindungsvorsprünge (41D) eingeschraubt sind, um die Innenverkleidung (42) mit der Abdeckverkleidung (41) zu verbinden.

19. Batteriesystem gemäß Anspruch 1, wobei die Verbindungsanschluss-(51)-Einfügeseiten der Aufnahmen (31) mit bogenförmigen Vorsprüngen (31a) versehen sind.

20. Batteriesystem gemäß Anspruch 1, das ein Batteriesystem ist, das an Bord eines elektrisch versorgten Fahrzeugs installiert ist.

## Revendications

1. Système de batterie comprenant :
un boîtier externe (2) logeant une pluralité de batteries (1) ; et
une fiche de service (4) qui se connecte au boîtier externe (2) d'une manière amovible ; la fiche de service (4) comprenant :
un boîtier de fiche (40) qui se connecte au boîtier externe (2) d'une manière amovible ;
un fusible (5) logé dans le boîtier de fiche (40) ; et
une paire de bornes de connexion (51) connectées aux extrémités du fusible (5) ; le boîtier externe (2) comprenant :
des bornes de sortie (7) connectées aux batteries (1) ;
une section de connexion de fiche (25) pour la connexion du boîtier de fiche (40) ; et
des logements (31) pour l'insertion et la connexion des bornes de connexion (51) de la fiche de service (4) quand le boîtier de fiche (40) est connecté avec la section de connexion de fiche (25),
dans lequel les bornes de connexion (51) se connectent électriquement aux logements (31) quand le boîtier de fiche (40) de la fiche de service (4) est connecté à la section de connexion de fiche (25) ; et le fusible (5) est connecté aux batteries (1) à travers les bornes de connexion (51) et les logements (31) pour délivrer en sortie une tension sur les bornes de sortie (7) ;
**caractérisé en ce que**
un joint (49) est fourni entre le boîtier de fiche (40) et la section de connexion de fiche (25) ;
le joint (49) est pris en sandwich entre le boîtier de fiche (40) et la section de connexion de fiche (25) pour une connexion étanche de manière que la fiche de service (4) soit connectée au boîtier externe (2) dans une configuration étanche par l'intermédiaire du joint (49) ;
les bornes de connexion (51) sont connectées au boîtier de fiche (40) dans une configuration mécaniquement flottante qui permet aux bornes de connexion (51) de se déplacer par rapport au boîtier de fiche (40) et perpendiculairement à la direction d'insertion,
le boîtier de fiche (40) est pourvu d'une enveloppe de couverture (41) ayant une région cylindrique (41A) et d'une enveloppe intérieure (42) logeant un fusible (5) connecté à l'intérieur de l'enveloppe de couverture (41),
l'enveloppe intérieure (42) est connectée à l'enveloppe de couverture (41) dans une configuration mécaniquement flottante qui permet à l'enveloppe intérieure (42) de se déplacer par rapport à l'enveloppe de couverture (41) ; et les bornes de connexion (51) du fusible (5) logé à l'intérieur de l'enveloppe intérieure (42) sont connectées au boîtier de fiche (40) dans une configuration mécaniquement flottante,
l'intérieur de la région cylindrique (41A) de l'enveloppe de couverture (41) a des bossages de connexion (41D) pour se connecter à l'enveloppe intérieure (42) ; l'enveloppe intérieure (42) est pourvue de trous de connexion (42D) pour insérer les bossages de connexion (41D) ; l'enveloppe intérieure (42) se connecte à l'enveloppe de couverture (41) dans une configuration qui insère les bossages de connexion (41D) à travers les trous de connexion (42D) ; le profil intérieur des trous de connexion (42D) est réalisé plus grand que l'extérieur des bossages de connexion (41D) ; et l'enveloppe intérieure (42) est connectée à l'enveloppe de couverture (41) dans une configuration mécaniquement flottante, et
la paire de bornes de connexion (51) est une paire de lames de fiche (51A), soit deux plaques métalliques disposées dans un plan commun ; et les trous de connexion (42D) sont des trous oblongs qui permettent aux bornes de connexion (51) de se déplacer dans la direction de l'épaisseur des lames de fiche (51A).

2. Système de batterie selon la revendication 1, dans lequel la paire de bornes de connexion (51) est une paire de lames de fiche (51A) qui consiste en deux plaques métalliques disposées dans un plan commun ; et les bornes de connexion (51) sont connectées au boîtier de fiche (40) dans une configuration mécaniquement flottante qui permet un mouvement dans la direction de l'épaisseur des lames de fiche (51A).

3. Système de batterie selon la revendication 2, dans lequel la section de connexion (25) du boîtier externe (2) a une région en saillie (25X) qui fait saillie à partir de la surface du boîtier externe (2); un joint (49) est disposé autour de tout le périmètre de la région en saillie (25X) ; le boîtier de fiche (40) a une région cylindrique (41A) pour l'insertion de la région en saillie (25X) de la section de connexion de fiche (25) ; et le joint (49) est pris en sandwich entre l'intérieur de la région cylindrique (41A) et l'extérieur de la région en saillie (25X) pour connecter la fiche de service (4) au boîtier externe (2) dans une configuration étanche.

4. Système de batterie selon la revendication 3, dans lequel le périmètre de la région en saillie (25X) de la section de connexion de fiche (25) est pourvue d'une rainure pour joint (25C) pour disposer le joint (49) ; et d'un joint (49) à joint torique (49A) est disposé dans la rainure pour joint (25C).

5. Système de batterie selon la revendication 1, dans lequel l'enveloppe de couverture (41) a une région cylindrique (41A) dans laquelle s'insère la région en saillie (25X) de la section de connexion de fiche (25).

6. Système de batterie selon la revendication 1, dans lequel la section de connexion de fiche (25) du boîtier externe (2) a un évidement de fiche (25B) pour l'insertion de l'enveloppe intérieure (42), l'enveloppe intérieure (42) est insérée dans l'évidement de fiche (25B), et la région en saillie (25X) de la section de connexion de fiche (25) est insérée dans la région cylindrique (41A) pour connecter la fiche de service (4) au boîtier externe (2).

7. Système de batterie selon la revendication 1, dans lequel l'enveloppe de couverture (41) est formée à partir de plastique comme une unique pièce ayant un capuchon de couverture long et étroit (41B) avec des régions d'extrémité semi-circulaires et des parois latérales cylindriques (41C) situés autour du périmètre du capuchon de couverture (41B).

8. Système de batterie selon la revendication 1, dans lequel l'enveloppe intérieure (42) est pourvue d'une plaque de base (42B) et de parois d'enceinte (42C) qui forment un compartiment de fusible (42A) et le fusible (5) est logé à l'intérieur du compartiment de fusible (42A) dans une configuration mécaniquement flottante.

9. Système de batterie selon la revendication 8, dans lequel le compartiment de fusible (42A) de l'enveloppe intérieure (42) est réalisé plus grand que le fusible (5) dans la direction d'insertion pour permettre au fusible de se déplacer librement à l'intérieur ; la largeur interne (W) du compartiment de fusible (42A) est réalisée plus grande que l'épaisseur (D) du fusible (5) ; et les lames de fiche (51A) des bornes de connexion (51), qui sont connectées au fusible (5), sont logées dans une configuration flottante qui permet un mouvement dans la direction de l'épaisseur des lames de fiche (51A).

10. Système de batterie selon la revendication 1, dans lequel le fusible (5) est doté d'un élément de fusible (50) avec des bornes de connexion (51) connectées aux deux extrémités et un porte-fusible (52) dans lequel l'élément de fusible (50) est monté ; et le porte-fusible (52) est maintenu à l'intérieur de l'enveloppe intérieure (42) dans une configuration mécaniquement flottante.

11. Système de batterie selon la revendication 10, dans lequel le porte-fusible (52) est réalisé en plastique et contient l'élément de fusible (50) en son intérieur ; et les lames de fiche (51A) des bornes de connexion (51) connectées aux deux extrémités de l'élément de fusible (50) sont moulées par insertion dans des positions fixes dans le porte-fusible (52).

12. Système de batterie selon la revendication 1, dans lequel l'enveloppe de couverture (41) est réalisée comme une unique pièce en plastique avec des parois latérales cylindriques (41C) situés autour d'un capuchon de couverture (41B) ; le capuchon de couverture (41B) est pourvu de bossages de connexion (41D) aux deux extrémités pour se connecter à l'enveloppe intérieure (42) ; les bossages de connexion (41D) ont des profils cylindriques circulaires qui font saillie à angle droit à partir de la surface intérieure du capuchon de couverture (41B) ; et les extrémités des bossages de connexion (41D) sont pourvues de trous de vis (41E) pour y visser des vis de fixation (43).

13. Système de batterie selon la revendication 12, dans lequel la hauteur (h) des bossages de connexion (41D) du boîtier de fiche (40) est réalisée plus longue que la longueur axiale (s) des trous de connexion (42D) ; les vis de fixation (43) sont vissées dans les bossages de connexion (41D) à travers des rondelles à large bord (44) ; le contour des rondelles à large bord (44) est réalisé plus grand que l'intérieur des trous de connexion (42D) ; et l'enveloppe intérieure (42) est empêchée de se détacher des bossages de connexion (41D).

14. Système de batterie selon la revendication 12, dans lequel les trous de connexion (42D) de l'enveloppe intérieure (42) sont allongés avec la dimension longue dans la direction de l'épaisseur des lames de fiche (51A) ; le diamètre intérieur des trous de connexion (42D) dans la direction de la largeur des lames de fiche (51A), qui est perpendiculaire à la direction d'épaisseur, est réalisé approximativement égal ou légèrement supérieur à un diamètre extérieur des bossages de connexion (41D) ; la dimension longue de l'intérieur des trous de connexion (42D) est réalisée plus grande que le diamètre extérieur des bossages de connexion (41D) dans la direction d'épaisseur des lames de fiche (51A) ;et les bossages de connexion (41D) insérés à travers les trous de connexion (42D) peuvent se déplacer par rapport aux trous de connexion (42D) dans la direction d'épaisseur des lames de fiche (51A).

15. Système de batterie selon la revendication 14, dans lequel la dimension longue des trous de connexion (42D) est réalisée égale à 1,05 à 3 fois le diamètre extérieur des bossages de connexion (41D).

16. Système de batterie selon la revendication 1, dans lequel des crochets de verrouillage (41F) sont disposés sur les deux côtés des parois latérales cylindriques (41C) de l'enveloppe de couverture (41) ; et les crochets de verrouillage (41F) s'enclenchent avec des cliquets de verrouillage (25A) situés sur le boîtier externe (2) pour connecteur la fiche de service (4) au boîtier externe (2).

17. Système de batterie selon la revendication 1, dans lequel les trous de connexion (42D) sont disposés à l'extérieur des deux extrémités des parois d'enceinte (42C) de l'enveloppe intérieure (42) pour l'insertion des bossages de connexion (41D) situés sur l'enveloppe de couverture (41).

18. Système de batterie selon la revendication 17, dans lequel les bossages de connexion (41D) sont insérés à travers les trous de connexion (42D) et des vis de fixation (43) sont vissées dans des bossages de connexion (41D) pour connecter l'enveloppe intérieure (42) à l'enveloppe de couverture (41).

19. Système de batterie selon la revendication 1, dans lequel les côtés d'insertion de bornes de connexion (51) des logements (31) sont pourvus de saillies de formation d'arc (31a).

20. Système de batterie selon la revendication 1, qui est un système de batterie installé à bord d'un véhicule à propulsion électrique.
